# EUROPÄISCHE PATENTSCHRIFT

(11) **EP 1 837 295 B1**
(45) Veröffentlichungstag und Bekanntmachung des Hinweises auf die Patenterteilung: **11.03.2009**
(21) Anmeldenummer: 07005790.6
(22) Anmeldetag: 21.03.2007
(51) Int. Cl.: B65G 1/127

(54) **Vorrichtung mit Lagerplätzen, insbesondere zur Aufnahme von Werkstückträgern, sowie System mit einem Förderband und einer Vorrichtung zur Aufnahme von Werkstückträgern**
Device with storage places, in particular for holding workpiece holders and system with a conveyor belt and a device for holding workpiece holders
Dispositif doté d'aires de stockage, en particulier pour la réception de portes-pièces, tout comme système doté d'une bande convoyeuse et d'un dispositif destiné à la réception de portes-pièces

(30) Priorität: 22.03.2006 DE 202006005038 U
(43) Veröffentlichungstag der Anmeldung: 26.09.2007
(73) Patentinhaber: Bernhard Hörl GmbH, 74391 Erligheim (DE)
(72) Erfinder: Hörl, Bernhard, 74391 Erligheim (DE)
(74) Vertreter: Kaufmann, Ursula Josefine

(56) Entgegenhaltungen:
- DE-A1- 3 901 201
- DE-A1- 4 034 592
- DE-U1- 8 325 381
- US-A- 1 980 850
- US-A1- 2004 238 326

## Beschreibung

Die Erfindung betrifft eine Vorrichtung mit Lagerplätzen, insbesondere zur Aufnahme von Werkstückträgern, sowie ein System mit einem Förderband und einer Vorrichtung zur Aufnahme von Werkstückträgern nach den Oberbegriffen der unabhängigen Ansprüche.

Vorrichtungen zur Zwischenspeicherung von Werkstückträgern, die an Förderbändern eingesetzt werden können, sind grundsätzlich bekannt. Auf den Werkstückträgern werden Werkstücke abgelegt, die am Förderband zusammengebaut und/oder bearbeitet werden sollen. Besonders in einer Massenfertigung ist es beispielsweise wünschenswert, schwankende Bearbeitungsgeschwindigkeiten am Band ausgleichen zu können.

Eine derartige Vorrichtung ist beispielsweise in der Offenlegungsschrift DE 39 01 201 A1 beschrieben. Aus der Gebrauchsmusterschrift DE 83 25 381 U1 ist eine Vorrichtung bekannt, die eine Speichereinrichtung für eine Mehrzahl von auf einem Förderband transportierbaren Werkstückträgern aufweist, in welcher die Werkstückträger in Lagerplätzen aufnehmbar sind. Es ist ein Hebemittel vorgesehen, mit dem die Werkstückträger vom Förderband in die als Kassettenblock ausgebildete Speichereinrichtung eingebracht werden können. Die Speichereinrichtung ist auf einem Rahmen verschiebbar. Am Ort der Vorrichtung ist das Förderband unterbrochen, wobei die Vorrichtung von dem einen Teilstück des Förderbands angelieferte Werkstückträger an das andere Teilstück des Förderbands, gegebenenfalls unter Zwischenspeicherung in der Speichereinrichtung, übergibt. Daher muss das Förderband entsprechend angepasst und in separate Teilstücke aufgeteilt werden. Die Werkstückträger sind speziell an die Speichereinrichtung angepasst. Zudem weisen Werkstückträger in der Produktion ein zum Teil beträchtliches Gewicht auf, das bis zu 10 kg oder mehr betragen kann.

Aus der DE 40 34 592 ist eine Lagervorrichtung bekannt, die paternosterartig ausgebildet ist. Spezielle, auf Laufrollen bewegbare Paletten sind in Trägern speicherbar, die sich auf einer Endlos-Umlaufbahn bewegen, die sich zwischen zwei Scheitelpositionen erstreckt. Die Paletten tragen ein Lagergut und werden in der Lagervorrichtung durch Träger gehalten, die gelenkig an Trägerhaltern gelagert sind, die sich entlang der Paternosterbahn bewegen können. Die Trägerhalter sitzen auf einer endlosen Tragkette.

Die US1980850 zeigt eine Vorrichtung, bei der Trageinheiten einer Endlos-Umlaufbahn folgen. Die Vorrichtung ist in einem Parkhaus zum Transport von Fahrzeugen vorgesehen. Zur Lagestabilisierung der Trageinheiten während der Vertikalförderung dienen seitliche Rollen. Beim oberen und unteren Verschieben in den Scheitelpunkten der Endlosumlaufbahn sind dies dagegen stirnseitige Vertiefungen zum Eingriff der Krallen der oberen Verschiebeeinheit bzw. die gesamte untere Rahmenkonstruktion zur Auflage auf der unteren Verschiebeeinheit.

Aufgabe der Erfindung ist es, eine flexibel einsetzbare Vorrichtung mit Lagerplätzen zu schaffen, die insbesondere zur Speicherung einer Mehrzahl von auf einem Förderband transportierbaren Werkstückträgern geeignet ist. Weiterhin soll ein System aus einem Förderband und einer derartigen Vorrichtung geschaffen werden.

Die Aufgabe wird erfindungsgemäß durch die Merkmale der unabhängigen Ansprüche gelöst. Günstige Ausgestaltungen und Vorteile der Erfindung ergeben sich aus den weiteren Ansprüchen und der Beschreibung.

Die erfindungsgemäße Vorrichtung weist eine Speichereinrichtung für eine Mehrzahl von Trageinheiten auf, die Lagerplätze bilden. Die Vorrichtung ist paternosterartig ausgebildet und weist eine Endlos-Umlaufbahn, bei der sich zwei parallele Schenkel zwischen einem oberen und einem unteren Scheitel erstrecken, wobei an dem oberen Scheitel einer Endlos-Umlaufbahn eine Verschiebeeinheit angeordnet ist, mit der jeweils eine Trageinheit horizontal von einem in den anderen Schenkel der Endlos-Umlaufbahn verschiebbar ist, und an dem unteren Scheitel der Endlos-Umlaufbahn ein Manipulator zur automatischen Verschiebung der Trageinheiten von dem einem Schenkel in den anderen Schenkel der Endlos-Umlaufbahn vorgesehen ist. Die Trageinheiten weisen seitlich abstehende zapfenartige Führungen auf, die mit parallelen Führungen in der Endlos-Umlaufbahn im Eingriff sind und zur Verschiebung und Halterung mit dem Manipulator und der Verschiebeeinheit vorgesehen sind.

Die Trageinheiten in der Speichereinrichtung sind auf einer im Arbeitszustand sich um wenigstens drei Lagerplätze in vertikaler Richtung erstreckenden Endlos-Umlaufbahn bewegbar, wobei an einer definierten Position der Endlos-Umlaufbahn der im Arbeitszustand horizontal beweglicher Manipulator zum Verschieben der Trageinheiten, insbesondere innerhalb der Umlaufbahn, angeordnet ist. Die definierte Position befindet sich im Arbeitszustand vorzugsweise am unteren Ende der Endlos-Umlaufbahn, d.h. an dem unteren Scheitel der Umlaufbahn. Die Laderichtung und die Entladerichtung der Trageinheiten sind tangential zur Endlos-Umlaufbahn an deren unteren oder oberen Scheitel der Endlos-Umlaufbahn gerichtet.

Die Vorrichtung bildet vorteilhaft einen Speicher mit einer oder mehreren Speichereinrichtung(en), in deren Trageinheiten Komponenten, wie Werkstücke, Werkstückträger, Bauteile oder Kleinteile, abgelegt und wieder entnommen werden können. Vorteilhaft ist, dass die Trageinheiten in der Speichereinrichtung in der Art des an sich bekannten Patemosterprinzips bewegbar sind. Dies bedeutet nicht, dass sie zwangsläufig permanent im Umlauf sein müssen, sondern dass sie in der Vorrichtung vorzugsweise jeweils stückweise, Trageinheit für Trageinheit, entlang der geschlossenen Umlaufbahn verschoben werden können. So können aus einer im Griffbereich beispielsweise eines Werkers an einem Arbeitsplatz befindlichen Trageinheit der Vorrichtung Komponenten entnommen und verarbeitet werden, bis die betreffende Trageinheit leer ist. Anschließend wird die nächste Trageinheit mit Komponenten an die betreffende Stelle geschoben, während die entleerte Trageinheit wegbewegt wird. Alternativ können die Trageinheiten vorteilhaft zur Aufnahme von Werkstückträgern eines Förderbands ausgebildet sein und die Vorrichtung an einem Förderband platziert sein und dort etwa als Zwischenspeicher oder dergleichen fungieren.

Auf engem Raum kann so ein Speicher mit großem Volumen geschaffen werden, und in den Speicherplätzen bzw. Trageinheiten abgelegte Komponenten können entnommen oder eingelagert werden. Die Vorrichtung ist kompakt und kann praktisch beliebig an Werkplätzen und Arbeitsstationen und besonders vorteilhaft an Förderbändern positioniert werden. Durch ihren modularen Aufbau kann die Vorrichtung in ihrer Speicherkapazität und ihren Abmessungen leicht an vorhandene Rahmenbedingungen angepasst werden. Die Trageinheiten können vorteilhaft an die jeweils in die Trageinheiten einzubringenden Komponenten angepasst werden. So können diese zum Ablegen von Kleinteilen mit einem festen Boden, etwa schubladenartig oder korbartig, ausgebildet sein oder nur mit festen Seitenteilen, auf bzw. zwischen denen Komponenten abgelegt werden können, beispielsweise Werkstückträger. Die Werkstückträger brauchen nicht speziell für die Trageinheiten ausgebildet sein, so dass eine Nachrüstung an einem Förderband möglich ist.

Entsprechend einer bevorzugten Ausgestaltung kann die Vorrichtung eine oder mehrere Speichereinrichtung(en) für eine Mehrzahl von auf einem Förderband transportierbaren Werkstückträgern aufweisen, in der die Werkstückträger in Lagerplätzen der Speichereinrichtung aufnehmbar sind. An einer definierten Position der Endlos-Umlaufbahn ist dabei ein im Arbeitszustand horizontal beweglicher Manipulator angeordnet. Durch die günstige Anordnung der Vorrichtung in Bezug auf das Förderband und die Anwendung des Paternosterbetriebs innerhalb der Vorrichtung ist eine Unterbrechung des Förderbands unnötig. Vielmehr kann die Vorrichtung praktisch an beliebiger Stelle an das Förderband gestellt werden. Teilweise können Komponenten des Förderbands mit benutzt werden. Eine spezielle Anpassung der Werkstückträger an die Speichereinrichtung der Vorrichtung ist nicht notwendig. Die Speichereinrichtung ist kompakt, und ein modulartiger Aufbau der Vorrichtung ist möglich. Damit kann die Vorrichtung an gegebene Platzverhältnisse am Förderband angepasst werden. Die Vorrichtung ist leicht in ihrer Höhe, ihrer Breite und auch ihrer Tiefe veränderbar. Dies kann durch ihren modulartigen Charakter auch nachträglich erfolgen.

Vorzugsweise ist jeweils eine der Trageinheiten durch den horizontalen Manipulator in der Endlos-Umlaufbahn um wenigstens einen Lagerplatz verschiebbar. Die Trageinheit wird vom Manipulator erfasst, horizontal verschoben und, gegebenenfalls nach einer vertikalen Verschiebung um einen Lagerplatz, wieder freigegeben. Die Verschiebung erfolgt in Umlaufrichtung tangential zum oberen bzw. unteren Scheitel des Endlos-Umlaufbands, wenn eine Trageinheit beladen wird. Beim Entladen kann die Trageinheit entgegen der Umlaufrichtung aus der Endlos-Umlaufbahn freigegeben werden. Vorteilhaft kann der Manipulator dadurch praktisch durch die Schenkel der Endlos-Umlaufbahn durchgreifen, ohne durch Führungen der Trageinheiten behindert zu werden. Trageinheiten und Manipulator sind zweckmäßig mechanisch aufeinander abgestimmt. Vorzugsweise sind die vertikal voneinander beabstandeten Enden der Endlos-Umlaufbahn als Transferstrecken für jeweils eine Trageinheit vorgesehen, um diese von einem Schenkel der Endlos-Umlaufbahn in den anderen zu transferieren. Durch geeignete Identifikationsmittel und/oder Zählmittel kann ferner die Position jeder Trageinheit innerhalb der Vorrichtung nachvollzogen werden. Dadurch kann ein gezielter Zugriff auf eine bestimmte Trageinheit und die darin befindliche Komponente erfolgen. Besonders günstig ist hier ein Zusammenwirken einer Steuerung beispielsweise eines Förderbands und der erfindungsgemäßen Vorrichtung, um gezielt auf definierte Trageinheiten in der Speichereinrichtung zugreifen zu können.

Vertikal beabstandet zur definierten Position des horizontalen Manipulators ist zweckmäßigerweise eine Verschiebeeinheit angeordnet, mit der jeweils eine Trageinheit in horizontaler Richtung entlang der Endlos-Umlaufbahn verschiebbar ist. Vorzugsweise ist die Verschiebeeinheit am oberen Scheitel der Endlos-Umlaufbahn angeordnet. Dadurch ergibt sich die Anordnung, dass am oberen und am unteren Scheitel jeweils eine automatische Verschiebung erfolgen kann. Die Seitenteile der Trageinheiten weisen vorteilhaft Führungen in Form von seitlich abstehenden Zapfen auf, mit denen sie in der Endlos-Umlaufbahn geführt sind. Gleichzeitig bilden die Zapfen Angriffspunkte für die Verschiebeeinheit und den Manipulator, um die Trageinheiten zu verschieben. Ein Be- und Entladen der Trageinheiten sowie ein Verschieben und Umlaufen der Trageinheiten wird erleichtert.

Vorteilhaft kann der Manipulator so ausgebildet sein, dass dieser in horizontaler Richtung aus der Endlos-Umlaufbahn herausgreifen kann. Damit ist eine günstige Ausgestaltung der Vorrichtung möglich, in der zwei oder mehr Speichereinheiten hintereinander aufgestellt sind und ein Manipulator von der einen Speichereinheit in die nächste greift. So können bevorzugt auf beiden Seiten eines Förderbands senkrecht zur Förderrichtung zwei oder mehr Speichereinrichtungen aufgestellt sein. Der eine horizontale Manipulator kann in die gegenüber positionierte Speichereinrichtung greifen und dort Trageinheiten einspeichern oder abholen.

Die Trageinheit kann vorzugsweise schubladenförmig, etwa mit einem festen Boden, ausgebildet sein. In einer solchen Trageinheit könne beispielsweise an Montageplätzen Kleinteile abgelegt sein. Durch die Platz sparende Bevorratung am Montageplatz lassen sich kürzere Taktzeiten erreichen, da ein Anliefern von Kleinteilen seltener erfolgen muss. Der Montageplatz kann an einem Förderband oder unabhängig von einem Förderband sein.

Die Trageinheiten können vorteilhaft auch so ausgebildet sein, dass förderbandübliche Werkstückträger in diese ablegbar sind. Günstig ist, wenn jeweils einer der Werkstückträger in jeweils eine Trageinheit einsetzbar ist, wobei die jeweils eine Trageinheit jeweils einen Lagerplatz in der Speichereinheit bildet. Vorzugsweise weist die Trageinheit zwei Seitenwände auf, zwischen denen der Werkstückträger ablegbar ist. Die Trageinheit bildet dann eine Art Schublade ohne Boden. Der Werkstückträger braucht nicht an die Speichereinrichtung angepasst zu sein, sondern kann in der Trageinrichtung abgelegt werden, welche dann in der Speichereinrichtung bzw. der Vorrichtung bewegt wird

Dazu ist es günstig, wenn der horizontale Manipulator eine Halterung aufweist, die jeweils eine Trageinheit verkippsicher halten kann. Damit können auch schwere Werkstückträger oder schlecht ausbalancierte Werkstückträger sicher gehandhabt werden.

Eine günstige Weiterbildung sieht vor, dass die Trageinheit an jeder Seitenwand wenigstens vier winklig nach außen abstehende Zapfen aufweist, von denen wenigstens drei verkippungssicher in entlang der Endlos-Umlaufbahn angeordneten Führungen im Eingriff sind. Durch den einfachen Aufbau der Speichereinrichtung mit Trageinheiten als Lagerplätzen lässt sich eine Art Rastermaß vorgeben, was im Zusammenwirken mit dem modulartigen Aufbau eine Anpassung der Vorrichtung an vorgegebene Förderbandverhältnisse oder auch die Wünsche des Kunden erleichtert.

Vorzugsweise sind zwei oberhalb des eingesetzten Werkstückträgers bzw. Bodens der Trageinheit angeordnete Zapfen mit je einer Stange verbunden. Dies ermöglicht eine mechanische Stabilisierung der Trageinheit und gegebenenfalls einen vorteilhaft einfachen Transfer des Werkstücksträgers mit seiner Trageinheit an einem entgegengesetzten Ende der Speichereinrichtung, wenn dieser in der Endlos-Umlaufbahn auf einen neuen Speicherplatz weiter geschoben wird, um am horizontalen Manipulator Platz für den Transfer einer Trageinheit zu schaffen. Dies ist beispielsweise zum Aufnehmen eines neuen Werkstückträgers vom Förderband oder zum Ablegen einen gespeicherten Werkstückträger auf das Förderband notwendig.

In vorteilhafter Weiterbildung ist der Werkstückträger in der Trageinheit auf je einer an jeder der Seitenwände angeordneten Halterungen ablegbar, wobei sich zwischen den Halterungen eine lichte Öffnung erstreckt. Damit kann, wenn der Werkstückträger beispielsweise durch einen Ausheber vom Förderband abgehoben ist, die Trageinheit mit den Halterungen unter den Werkstückträger geschoben werden. Der Werkstückträger wird durch sein Eigengewicht in der Trageinheit gehalten, indem der Ausheber einfach abgesenkt wird.

Vorteilhaft sind die Trageinheiten im Arbeitszustand in wenigstens zwei in horizontaler Richtung versetzten Türmen äquidistant übereinander gestapelt angeordnet. Die Türme bilden vertikale Schenkel der Endlos-Umlaufbahn. Die Höhe der Türme kann an die Zahl der auf dem Förderband üblicherweise kursierenden Werkstückträger angepasst werden. Zweckmäßigerweise ist die Zahl der verfügbaren Lagerplätze, d.h. die Höhe der Speichereinrichtung, um wenigstens zwei, vorzugsweise drei, größer als die der aufgenommenen Werkstückträger, damit ein Verschieben in der Endlos-Umlaufbahn problemlos an deren oberem und unterem Ende vonstatten geht.

Zweckmäßigerweise ist der horizontale Manipulator an der unteren Position der Speichereinrichtung angeordnet. Die untere Position, d.h. der untere Scheitel der Endlos-Umlaufbahn, dient zum Transfer der Trageinheiten bzw. dazu, den Werkstückträger aus der Speichereinrichtung bzw. der Trageinheit auf das Förderband zu transportieren oder vom Förderband in die Speichereinrichtung zu befördern. Dazu ist es vorteilhaft, wenn am entgegengesetzten Ende eine Verschiebeeinheit angeordnet ist, mit der jeweils eine Trageinheit in horizontaler Richtung verschiebbar ist. Bevorzugt kann jeweils eine der Trageinheiten von einem in den anderen Turm der Speichereinrichtung verschiebbar sein.

Es ist zweckmäßig, wenn der horizontale Manipulator auf einer Längsführung geführt ist. Weiterhin kann ein vertikaler Hubmechanismus vorgesehen sein, mit dem eine Vertikalbewegung der Trageinheiten in der Endlos-Umlaufbahn durchführbar ist. Vorzugsweise kann der Hub um einen Lagerplatz bzw. eine Trageinheit nach oben oder nach unten erfolgen, Vorteilhaft bewegt der Hubmechanismus nicht nur die Trageinheiten, sondern auch den Manipulator in vertikaler Richtung, wobei der Hubmechanismus mit dem Manipulator eine Baueinheit bildet.

Günstigerweise kann der horizontale Manipulator mit dem vertikalen Hubmechanismus als ein Bauteil so verbunden sein, dass der Hubmechanismus gemeinsam mit dem Manipulator horizontal verschieblich ist. Fährt der horizontale Manipulator in seine eine oder andere horizontale Endposition, beispielsweise jeweils unter einem Turm mit Trageinheiten, ist der vertikale Manipulator richtig positioniert, um die eine Trageinheit, welche aktuell in Wirkverbindung mit dem horizontalen Manipulator ist, mit dem Manipulator anzuheben oder abzusenken.

Ist vertikal benachbart zum horizontalen Manipulator jedem vertikalen Schenkel der Endlos-Umlaufbahn ein Arretiermittel zugeordnet, mit dem eine geodätisch direkt oberhalb des horizontalen Manipulators angeordnete Trageinheit an ihrer Führung arretierbar ist, kann ein vertikales Heben oder Absenken der im betreffenden Turm vorhandenen Trageinheiten erfolgen. Es handelt sich dabei zweckmäßigerweise um diejenige Trageinheit, welche das untere Ende jedes der Türme bildet. Auf dieser Trageinheit stützen sich die darüber befindlichen Trageinheiten ab. Selbstverständlich können in vertikaler Richtung weitere derartige Arretiermittel vorgesehen sein, die synchron mit dem untersten Arretiermittel zusammenwirken.

In einer günstigen Weiterbildung kann auch zwischen zwei vertikalen Schenkeln der Endlos-Umlaufbahn mindestens ein weiterer Turm mit Trageinheiten angeordnet sein. Dadurch kann mehr Speicherplatz geschaffen werden.

Es kann auch eine Mehrzahl von in horizontaler Richtung angeordneten Speichereinrichtungen vorgesehen sein, wobei jede eine Endlos-Umlaufbahn aufweist, die über einen gemeinsamen horizontalen Manipulator gekoppelt sind. Dabei ist das Förderband zwischen den Speichereinrichtungen angeordnet, und wenigstens ein horizontaler Manipulator greift beispielsweise über oder unter das Förderband in die horizontal benachbarte Speichereinrichtung.

Günstigerweise weist jede Speichereinrichtung jeweils eine eigene Verschiebeeinheit auf. Ebenso günstig weist jede Speichereinrichtung jeweils einen eigenen horizontalen Manipulator mit einem vertikalen Hubmechanismus auf. Damit ist jeweils ein separates Verschieben von Trageinheiten innerhalb der jeweiligen Speichereinrichtung möglich.

Ebenso kann eine Ausgestaltung vorgesehen sein, bei der die in horizontaler Richtung benachbart angeordneten Speichereinrichtungen in vertikaler Richtung versetzt sind. Damit ist eine mehrstöckige Anordnung der Vorrichtung möglich.

Vorteilhaft kann eine Hubeinheit vorgesehen sein, mit der ein Werkstückträger von einem Förderband abnehmbar ist, um den Werkstückträger in Wirkverbindung mit dem horizontalen Manipulator zu bringen. Es kann jedoch mit Vorteil eine förderbandeigene Hubeinheit verwendet werden, die bereits als Ausstattung am Förderband installiert sind, insbesondere ein üblicher Ausheber oder eine Hubeinheit in einer Ausschiebestation des Förderbands.

Besonders vorteilhaft können der horizontale Manipulator und/oder der vertikale Hubmechanismus und/oder die Verschiebeeinheit einen pneumatischen Antrieb aufweisen. Damit können auch hohe Lasten zuverlässig und sicher bewegt werden. Die Kraftübertragung ist einfach zu bewerkstelligen. Natürlich können gegebenenfalls auch andere Antriebstypen oder Kombinationen verschiedenster Antriebstypen eingesetzt werden. Dies kann abhängig vom Einsatz der Vorrichtung und/oder dem zu bewegenden Gewicht der Gesamtheit der Trageinheiten entschieden werden. Besonders vorteilhaft ist bei einem pneumatischen Antrieb, dass eine besonders präzise Lagerung der Trageinheiten möglich ist. Ferner sind Platzeinsparungen möglich. Im Gegensatz zu zwangsgeführten Antrieben wie Kettentrieben ist es z.B. nicht notwendig, vertikale Abstände zwischen den Trageinheiten vorzusehen. Bei einem zwangsgeführten Antrieb, z.B. mit einem Kettenantrieb, ermöglichen vertikale Abstände zwischen den Trageinheiten das unvermeidbares Schwingen der Trageinheiten an den Scheiteln der Endlos-Umlaufbahn.

Weiterhin kann beispielsweise ein Antrieb mit einem Triebmittel, bevorzugt einem Kettentrieb, und/oder ein Elektroantrieb undloder ein magnetischer Antrieb undloder ein induktiver Antrieb eingesetzt werden. Dies kann sowohl für die Bewegung der Trageinheiten innerhalb der Endlos-Umlaufbahn, als auch für den horizontalen Manipulator und/oder den vertikalen Hubmechanismus und/oder die Verschiebeeinheit vorgesehen sein. Bei einem Kettentrieb kann beispielsweise jeweils eine Kette zu beiden Seiten der Trageinrichtungen in der Speichereinrichtung entlang der Endlos-Umlaufbahn gelegt sein, um die Trageinheiten zu bewegen.

Es können weiterhin auch Identifizierungsmittel und/oder Zählmittel vorgesehen sein, welche die vom Förderband aufgenommenen und/oder an das Förderband abgegebenen Werkstückträger identifizieren und/oder zählen. So kann ein Strichcode-Leser vorgesehen sein und/oder eine Funkeinrichtung, beispielsweise ein so genannter RFID-Empfänger, der Funksignale vom Werkstückträger oder einer darauf befindlichen, codierten Komponente empfängt. Damit kann vorteilhaft in einer Steuerung die Art, Position und Zahl der Werkstückträger in der Vorrichtung verwaltet werden. Es ist eine Zwischenspeicherung von gleichartigen Werkstückträgern möglich, um ungleichmäßige Bearbeitungszeiten oder Wartungspausen am Förderband auszugleichen. Es ist auch ein Austausch von Werkstückträgern mit unterschiedlichen Komponenten möglich. So können schnell und einfach in einer Serienfertigung beispielsweise von Außenspiegeln Werkstückträger mit rechten Außenspiegeln kurzfristig gegen Werkstückträger mit linken Außenspiegeln ausgetauscht werden, wobei Werkstückträger mit den rechten Außenspiegeln in der Vorrichtung eingespeichert werden, während Werkstückträger mit linken Außenspiegeln aus der Vorrichtung entnommen und auf das Förderband gebracht werden.

Bei dem erfindungsgemäßen System aus Förderband und Vorrichtung mit einer Speichereinrichtung ist das Förderband unterbrechungsfrei durch die Vorrichtung führbar.

Bevorzugt können die Trageinheiten in der Speichereinrichtung auf einer im Arbeitszustand sich um wenigstens drei Lagerplätze bzw. Trageinheiten in vertikaler Richtung erstreckenden Endlos-Umlaufbahn bewegbar sein, wobei an einer definierten Position der Endlos-Umlaufbahn ein im Arbeitszustand horizontal beweglicher Manipulator angeordnet sein kann.

Bei einer günstigen Ausgestaltung können die Trageinheiten in der Speichereinrichtung in wenigstens zwei in horizontaler Richtung versetzten Türmen mit äquidistant übereinander gestapelt angeordnet sein. Die Höhe der Türme kann an die Zahl der erwünschten Lagerplätze bzw. Trageinheiten leicht angepasst werden.

Der vordere Turm kann in einer besonders günstigen und kompakten Ausgestaltung geodätisch über dem Förderband und der hintere Turm in horizontaler Richtung versetzt neben dem Förderband angeordnet sein.

Eine förderbandeigene und/oder vorrichtungseigene Hubeinheit kann zweckmäßigerweise vorgesehen sein, mit der ein auf dem Förderband befindlicher Werkstückträger vom Förderband aufnehmbar und in Wirkverbindung mit einem horizontalen Manipulator der Vorrichtung bringbar ist oder von einem horizontalen Manipulator der Vorrichtung entnehmbar und auf das Förderband ablegbar ist. Solche Hubeinheiten sind an Förderbändern an sich üblich. Beispielsweise werden dort an bestimmten Arbeitsplätzen mit derartigen Hubeinheiten Werkstückträger vom Förderband getrennt, um einen bestimmten Montageschritt auszuführen.

Alternativ oder zusätzlich können wenigstens zwei Speichereinrichtungen in Förderrichtung nebeneinander angeordnet sein. Die Vorrichtung lässt sich modular aufbauen und entsprechend flexibel gestalten.

Alternativ oder zusätzlich können wenigstens zwei Speichereinrichtungen in im Arbeitszustand horizontaler Richtung senkrecht zur Förderrichtung versetzt angeordnet sein. Auch können wenigstens zwei Speichereinrichtungen vertikal versetzt zueinander angeordnet sein, womit eine Vorrichtung sich auch über zwei oder mehr Stockwerke erstrecken kann. Vorzugsweise kann der horizontale Manipulator oder wenigstens ein horizontaler Manipulator in der Vorrichtung von dem einen in den horizontal versetzten Speicher bewegbar sein. Damit können Werkstückträger beispielsweise in Speichereinrichtungen beidseits des Förderbands eingelegt und herausgenommen werden, ohne das Förderband unterbrechen zu müssen. So kann auch der horizontale Manipulator von dem einen in den horizontal versetzten Speicher bewegbar sein.

Eine günstige Ausgestaltung ist, die Vorrichtung an einer Aushebevorrichtung des Förderbands anzuordnen, bei der Werkstückträger vertikal vom Förderband abhebbar sind. Dies ist bevorzugt an Förderbändern zweckmäßig, auf denen Werkstückträgern auf seitlichen Gurtbändern transportiert werden. Solche Aushebevorrichtungen oder Hubeinheiten sind üblicherweise an förderbandseitigen Arbeitsplätzen vorgesehen. Der Werkstückträger wird zur Bearbeitung hochgehoben, während die Gurtbänder weiterlaufen. Auf dem Förderband befindliche Werkzeugträger werden an definierten Positionen festgehalten, während die Gurtbänder unter ihnen vorbeistreichen.

Bei Förderbändern mit Werkstückträgern, die einen eigenen Antrieb aufweisen, der diese auf einer schienenartigen Strecke befördert, kann die Vorrichtung vorteilhaft an einer dort üblichen weichenartigen Ausschiebevorrichtung des Förderbands angeordnet sein, bei der Werkstückträger aus einer Hauptbahn des Förderbands auskoppelbar sind. Solche Förderbänder sind auch als Shuttleband bekannt. Selbstverständlich kann die Vorrichtung auch eine oder mehrere vom Förderband unabhängige Hubeinrichtung vorsehen, um den jeweiligen Werkstückträger in den Wirkungsbereich des horizontalen Manipulators zu bringen.

Vorteilhaft können Identifizierungsmittel und/oder Zählmittel vorgesehen sein, welche die vom Förderband aufgenommenen und/oder an das Förderband abgegebenen Werkstückträger identifizieren und/oder zählen. Mit diesen Daten kann eine Steuerung der Speichereinrichtung gespeist werden, um beispielsweise eine Abgabe oder Aufnahme der Werkstückträger bedarfsgerecht beeinflussen zu können

Mit Vorteil kann die Steuerung der Vorrichtung in einer vorhandenen Förderbandsteuerung integriert sein, beispielsweise in einer förderbandüblichen, speicherprogrammierbaren SPS-Steuerung. Es kann selbstverständlich auch eine vorrichtungseigene Steuerung vorgesehen sein.

Die Erfindung ist nachfolgend beispielhaft, ohne Beschränkung der Allgemeinheit, anhand von in Zeichnungen dargestellten Ausführungsbeispielen näher erläutert.

Es zeigen:
- Fig. 1: einen Ausschnitt aus einem bevorzugten System mit einer ersten bevorzugten Vorrichtung und einem Förderband mit Werkstückträgern;
- Fig. 2: einen Ausschnitt aus einem bevorzugten System mit einer zweiten bevorzugten Vorrichtung und einem Förderband mit Werkstückträgern;
- Fig. 3: einen Ausschnitt aus einem bevorzugten System mit einer dritten bevorzugten Vorrichtung und einem Förderband mit Werkstückträgern;
- Fig. 4a, b: eine Seitenansicht einer bevorzugten Vorrichtung mit Verblendung (Fig. 4a) und ohne Verblendung (Fig. 4b) von Speichereinrichtungen;
- Fig. 5a-o: in Einzelschritten einen Ablauf zum Betreiben einer bevorzugten Vorrichtung mit einer Speichereinrichtung, bei dem ein Werkstückträger von einem Förderband aufgenommen und gegen einen anderen Werkstückträger aus der Speichereinrichtung getauscht wird, welcher auf dem Förderband abgelegt wird;
- Fig. 6a, b: zwei Detailansichten einer Verschiebeeinheit zum Verschieben von Werkstückträgern in deren Trageinheiten innerhalb einer Speichereinrichtung; und
- Fig. 7a, b: zwei Ansichten eines bevorzugten Trageinheit für Werkzeugträger.

In den Figuren sind funktionell gleich wirkende Elemente jeweils mit denselben Bezugszeichen beziffert. Weiterhin sind der Übersichtlichkeit wegen in den Figuren nicht alle Elemente beziffert. Zu deren Erläuterung und zur Vermeidung unnötiger Wiederholungen wird jeweils auf entsprechende vorhergehende Figurenbeschreibungen verwiesen.

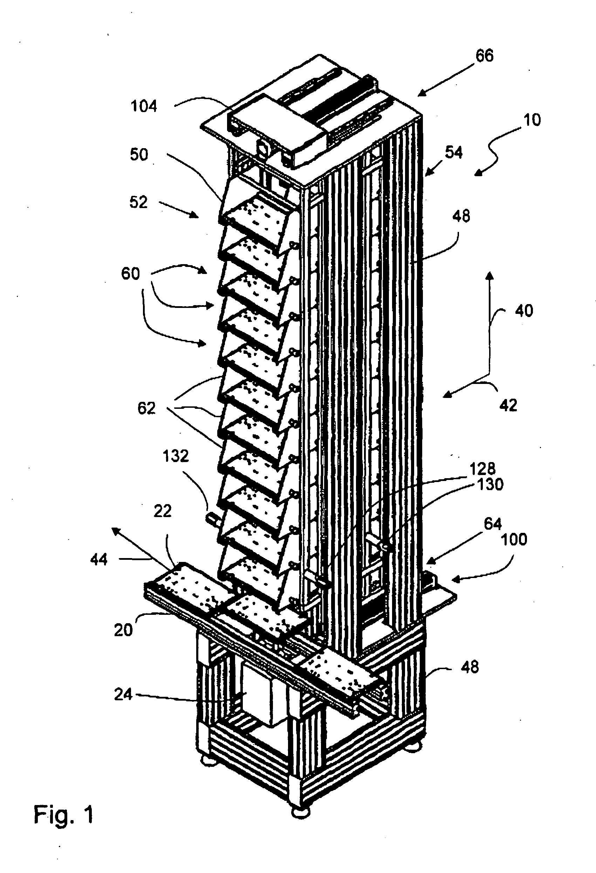

Eine bevorzugte erfindungsgemäße Vorrichtung 10 einer ersten Ausgestaltung in beispielhafter Kombination mit einem Förderband 20 ist Figur 1 zu entnehmen. Die Vorrichtung 10 umfasst eine Speichereinrichtung 50 für eine Mehrzahl von auf dem Förderband 20 transportierbaren Werkstückträgern 22, in welcher die Werkstückträger 22 in Trageinheiten 62, welche Lagerplätze 60 der Speichereinrichtung 50 bilden, aufnehmbar sind. Die Höhe der Vorrichtung 10 ergibt sich aus der Zahl der übereinander angeordneten Trageinheiten 62 sowie Transferstrecken für die Trageinheiten 62 am oberen und unteren Ende der Speichereinrichtung 50.

Die Vorrichtung 10 steht neben dem ausschnittsweise dargestellten Förderband 20 mit Gurtbändern 32, 34, die beidseits im Förderband 20 verlaufen und auf denen eine Mehrzahl von Werkstückträgern 22 abgelegt sind, die in Förderrichtung 44 befördert werden sollen. Zwischen den Gurtbändern 32, 34 ist das Förderband weitgehend nach unten offen. Ein solches als Gurtförderband ausgebildetes Förderband 20 ist allgemein bekannt. Die Vorrichtung 10 ist in ihrer Positionierung zum Förderband 20 im Arbeitszustand gezeigt.

Jeweils eine Trageinheit 62 ist einem Lagerplatz 60 der Speichereinrichtung 50 zugeordnet. Die Lagerplätze 60, die am obersten und untersten Ende (Position 64, Position 66) der Speichereinrichtung 50 angeordnet sind, dienen dem Transfer der Trageinheiten 62 innerhalb der Speichereinrichtung 50 und/oder zum Einlagern oder Auslagern der Trageinheiten in die oder aus der Speichereinheit 50.

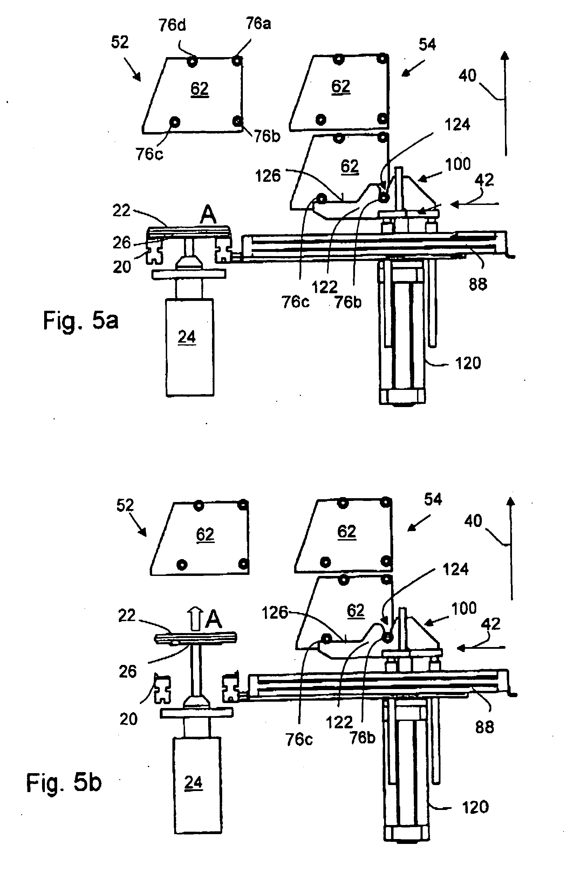

Die Trageinheiten 62 können auf einer sich hauptsächlich in vertikaler Richtung 40 erstreckenden Endlos-Umlaufbahn 90 bewegt werden, wie später in Figur 5a-5o noch detailliert erläutert wird. Die Positionen 64, 66 entsprechen dem unteren bzw. oberen Scheitel der Endlos-Umlaufbahn 90. Die Trageinheiten 62 sind äquidistant in zwei in horizontaler Richtung 42 benachbarten Türmen 52, 54 der Speichereinrichtung 50 angeordnet. Sie können, wie aus der Figur 1 ersichtlich, praktisch abstandslos aufeinander gestapelt werden.

Die Bewegung der Trageinheiten 62, in denen Werkstückträger 22 abgelegt sind, entspricht dem an sich bekannten Patemosterprinzip. Die Speichereinrichtung 50 ist in eine Verblendung 48 eingeschalt und auf einem entsprechenden, nicht näher bezeichneten Rahmen gelagert, der zum Teil unter das Förderband 20 ragt. An einer ersten, dem unteren Ende der Speichereinrichtung 50 entsprechenden Position 64 der Speichereinrichtung 50 ist ein in horizontaler Richtung 42 beweglicher Manipulator 100 angeordnet, am in vertikaler Richtung 40 entgegengesetzten Ende der Speichereinrichtung 50 ist an einer oberen Position 66 eine Verschiebeeinheit 104 angeordnet. Der horizontale Manipulator 100, der bevorzugt auch vertikal bewegt werden kann, wie in Figur 5a-5o erläutert wird, sorgt für den Transfer von Werkstückträgern 22 in die und aus der Speichereinrichtung 50. Die Endladerichtung und die Beladerichtung der Trageinheiten 62 ist jeweils tangential zur Endlos-Umlaufbahn 90 an deren oberen bzw. unteren Scheitel 64, 66. Die Trageinheiten 62 sind seitlich gehalten bzw. geführt. Die Verschiebeeinheit 104 verschiebt jeweils eine Trageinheit 62 innerhalb der Speichereinrichtung 50 von einem Turm 52 oder 54 in den anderen Turm 54 oder 52, je nach gewählter Umlaufrichtung in der Endlos-Umlaufbahn. Vorzugsweise erfolgt dies mittels eines Pneumatikzylinders. Zweckmäßigerweise sind die Positionen 64 und 66 an den Scheiteln der Endlos-Umlaufbahn 90 nicht zum Speichern von Trageinheiten 62 vorgesehen, sondern zur Durchführung des Transits und der Bewegung der Trageinheiten entlang ihrer Endlos-Umlaufbahn in der Speichereinheit 50.

Jeweils einer der Werkstückträger 22 ist in jeweils eine der Trageinheiten 62 einsetzbar, wobei die jeweils eine Trageinheit 62 durch den horizontalen Manipulator 100 jeweils in einen der Lagerplätze 60 einsetzbar ist.

Vertikal benachbart zum horizontalen Manipulator 100 ist jedem Turm 52, 54 der Speichereinrichtung 50 ein Arretiermittel 128, 130 zugeordnet, insbesondere jeweils durch Pneumatikzylinder betätigbar, mit dem die jeweils geodätisch direkt oberhalb des horizontalen Manipulators 100 angeordnete Trageinheit 62 arretierbar ist. Die gesamten, beispielsweise im Turm 52 darüber angeordneten Trageinheiten 62 liegen auf der arretierten Trageinheit 62 auf. Eine vertikale Verschiebung der Trageinheiten 62 um einen Lagerplatz 60 bzw. eine Trageinheit 62 nach oben im Turm 52 oder im Turm 54 um einen Lagerplatz 60 bzw. eine Trageinheit 62 nach unten verschoben wird zweckmäßigerweise durch eine vertikalen Hubmechanismus, beispielsweise einen pneumatischen Hubzylinder bewirkt, der mit dem horizontalen Manipulator 100 wirkverbunden ist und betätigt werden kann, wenn der Manipulator 100 sich in der richtigen Position und im richtigen Arbeitstakt unterhalb des einen oder anderen Turms 52, 54 befindet.

Der förderbandnahe Turm 52 ragt über das Förderband 20, während der hintere Turm 54 der Speichereinrichtung 50 neben dem Förderband 20 angeordnet ist. Der Rahmen ragt teilweise unter das Förderband 20 bzw. den vorderen Turm 52. Die Vorrichtung 10 weist damit für das Förderband 20 zwischen ihrem Rahmen und dem vorderen Turm 52 der Speichereinrichtung 50 in vertikaler Richtung 40 eine Aussparung auf, durch welche das Förderband 20 unterbrechungsfrei geführt werden kann. Dadurch ist die Vorrichtung 10 sehr kompakt. Durch ihre Höhe kann die Zahl der Lagerplätze 60 bzw. Trageinheiten 62 eingestellt werden.

Gezeigt ist in der Figur 1 die Situation, bei der ein Werkstückträger 22 durch eine Hubeinheit 24, beispielsweise einen förderbandeigenen Ausheber, vom Förderband 20 abgehoben ist. Die stromauf nachfolgenden Werkstückträger 22 werden in üblicher Weise durch geeignete, übliche förderbandseitige Arretierungen festgehalten, während die Gurtbänder 32, 34 darunter weiterlaufen und die stromab befindlichen Werkstückträger 22 weiter zu ihrem nächsten Bestimmungsort transportieren.

In einem zeichnerisch nicht ausgeführten Ausführungsbeispiel ist die Vorrichtung 10 an einem Arbeitsplatz positioniert, um dort Kleinteile zur Verarbeitung zur Verfügung zu stellen, die in Trageinheiten 62 gelagert sind. Ein Förderband 20 ist in diesem Ausführungsbeispiel nicht vorgesehen. Vorzugsweise weisen die Trageinheiten 62 dann einen festen Boden auf, auf dem die Kleinteile abgelegt sind. Die Bewegung der Trageinheiten 62 entlang der Endlos-Umlaufbahn 90 kann wie in Figur 1 beschrieben erfolgen.

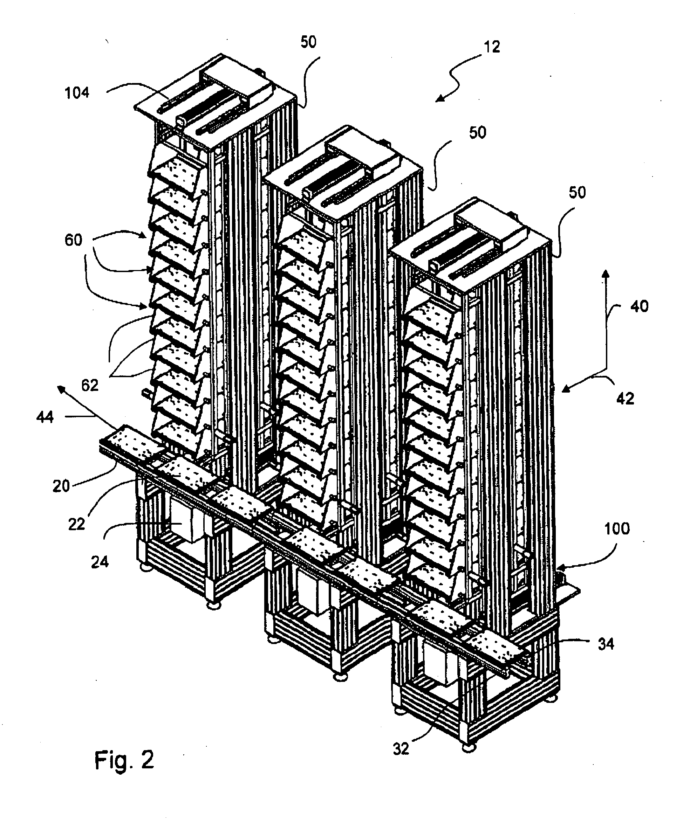

Figur 2 zeigt eine Variante zur Ausgestaltung nach Figur 1, bei der eine Vorrichtung 12 aus drei, vorzugsweise identisch aufgebauten Speichereinheiten 50 zusammengestellt sind, die in Förderrichtung 44 am Förderband 20 aufgestellt sind. Es ist deutlich der modulare Charakter der Vorrichtung 12 zu erkennen. Das Förderband 20 erstreckt sich in Förderrichtung 44 unterhalb des jeweiligen vorderen Turms 52 der Speichereinrichtungen 50. Das Förderband 20 muss nicht unterbrochen werden, um in Wirkverbindung mit der Vorrichtung 12 zu treten.

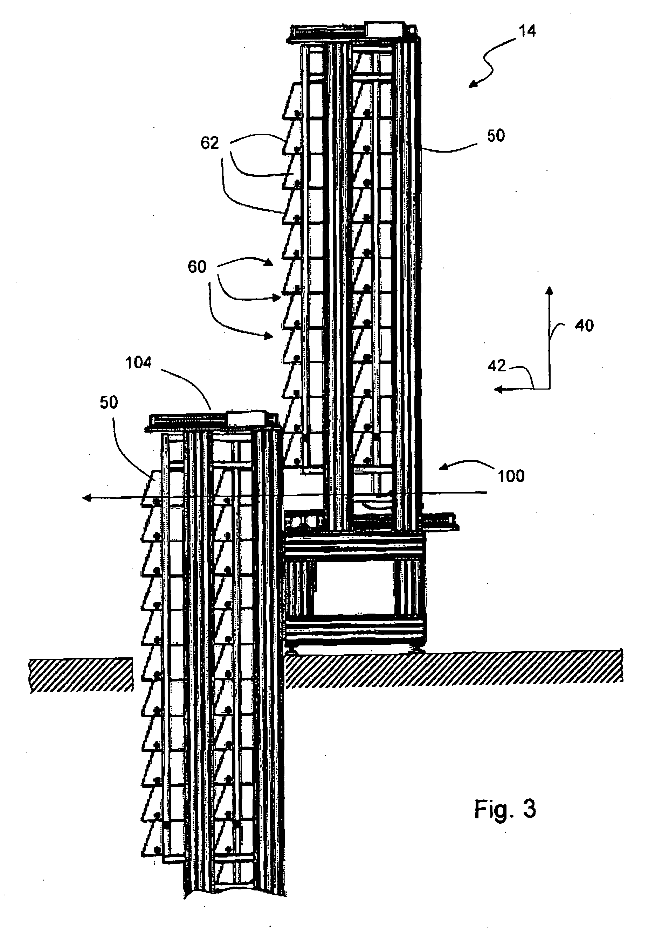

Die in Figur 3 gezeigte Variante einer Vorrichtung 14 weist zwei in horizontaler Richtung 42 und in vertikaler Richtung 40 versetzt angeordnete Speichereinrichtungen 50 auf. Die geodätisch untere Speichereinheit 50 ragt nach unten durch einen Boden 16 in ein tiefer liegendes Geschoss. Das Förderband 20 führt zwischen den beiden Speichereinrichtungen 50 der Vorrichtung 14 durch; die Förderrichtung ist hier senkrecht zur Bildebene. Beide Speichereinrichtungen 50 weisen zweckmäßigerweise je einen eigenen horizontalen Manipulator 100 mit vertikalem Hubmechanismus auf sowie eine eigene Verschiebeeinheit 104. Die Umlaufrichtung der beiden Speichereinheiten 50 ist günstigerweise gegenläufig. Der horizontale Manipulator 100 der geodätisch höheren Speichereinheit 50 ist so ausgebildet, dass er über das Förderband 20 hinweg in die geodätisch niedrigere Speichereinheit 50 eingreifen kann, um Trageinheiten 62 dort abzulegen oder aufzunehmen.

Selbstverständlich können die Vorrichtungen 10, 12, 14 an einem Förderband 20 miteinander beliebig kombiniert werden. Ebenso ist eine Kombination der Vorrichtungen 10, 12, 14 miteinander in einer Anwendung ohne Förderband 20 möglich.

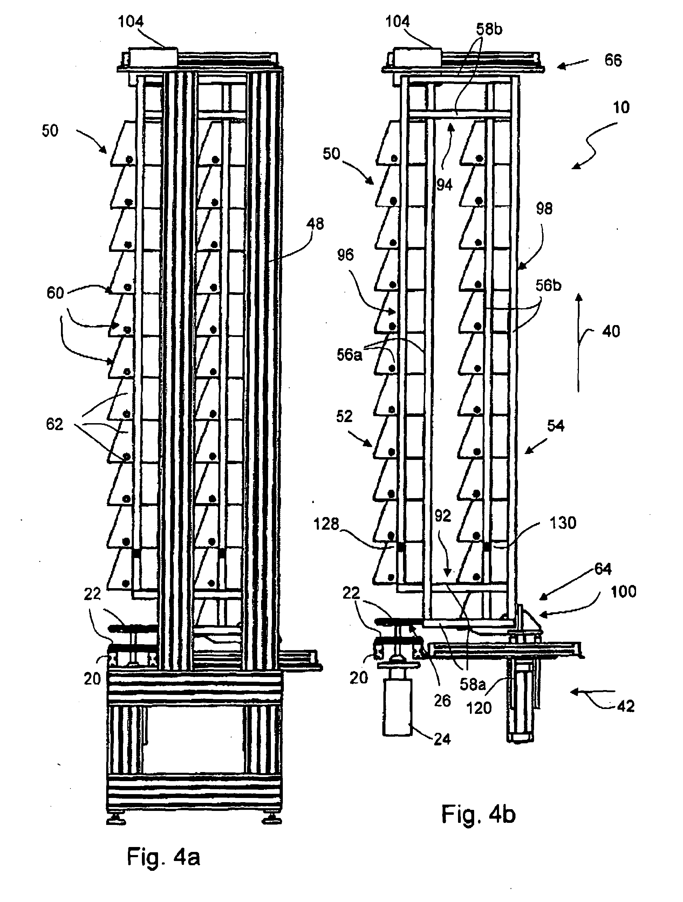

Die Figuren 4a und 4b illustrieren den Aufbau einer Speichereinheit 50 einer der Vorrichtungen 10, 12, 14 als Seitenansicht, die in Figur 4a mit ihrer Verblendung 48 mit zum Lagern vorgesehenem Rahmen und in Figur 4b ohne Verblendung 48 und Rahmen quasi "frei schwebend" dargestellt ist, um ihren inneren Aufbau deutlich zu machen.

Auf dem beispielhaft gezeigten Förderband 20 ist jeweils ein Werkstückträger 22 zu erkennen, der stromauf des, vorzugsweise fördebandeigenen, Aushebers 26 mit förderbandüblichen Stoppmitteln angehalten wird und so lange dort verbleibt, bis das Förderband 20 bzw. der Ausheber 26 wieder freigegeben wird. Die nicht dargestellten Fördergurte laufen in dieser Zeit weiter unter den angehaltenen Werkstückträgern 22 durch. Ein weiterer Werkstückträger 22 ist auf dem Ausheber 26 abgelegt und vom Förderband 20 abgehoben.

Deutlich erkennbar sind die beiden Türme 52, 54 der Speichereinrichtung 50, von denen der förderbandnahe Turm 52 direkt über dem Förderband 20 angeordnet ist.

Zum Betätigen des Aushebers 26 ist eine, vorzugsweise förderbandeigene, Hubvorrichtung 24, vorzugsweise ein Pneumatikzylinder, vorgesehen. Der Werkstückträger 22 ist bei solchen Förderbändern 20 an seiner Unterseite an den Ausheber 26 üblicherweise so angepasst, dass er in definierter Weise vom Förderband 20 abgehoben werden kann. Üblicherweise sind dazu Arretierzapfen am Ausheber 26 und entsprechende Eingriffsmöglichkeiten am Werkstückträger 22 vorgesehen.

Die Endlos-Umlaufbahn 90 der Speichereinrichtung 50 ist in Figur 4b deutlich zu erkennen. Dem einen Turm 52 ist ein vertikaler Schenkel 96, dem anderen Turm 54 der andere vertikale Schenkel 98 der Endlos-Umlaufbahn 90 zugeordnet. Die unteren Position 64 des horizontalen Manipulators 100 entspricht einer unteren Traverse 92, die obere Position 66 der Speichereinheit 50 entspricht einer oberen Traverse 94 der Endlos-Umlaufbahn 90.

Die vertikalen Schenkel 96, 98 der Endlos-Umlaufbahn 90 umfassen jeweils zwei parallel verlaufende, vertikale schienenartige Führungen 56a, 56b, die mit entsprechenden Elementen (seitliche Zapfen) an den Trageinheiten 62 korrespondieren, um diese beladen und unbeladen verkippsicher in der Endlos-Umlaufbahn 90 bewegen zu können. Die Traversen 92, 94 sind jeweils mit einem Paar horizontaler schienenartiger Führungen 58a, 58b versehen. Die Führungen 56a, 56b, 58a, 58b können beispielsweise durch zu den Trageinheiten 62 bzw. deren seitlichen Zapfen geöffnete U-Profile gebildet sein.

Zu erkennen ist an dem horizontalen Manipulator 100 ein vertikal angeordneter vertikaler Hubmechanismus 120, mit dem der horizontale Manipulator 100, bzw. dessen Halterung zur Aufnahme einer Trageinheit 62, angehoben oder abgesenkt werden kann.

Mittels der Figuren 5a bis 5o wird ein Ablauf beim Austauschen von Werkstückträgern 22 in einer Vorrichtung entsprechend Figur 1 erläutert. Dabei ist der Übersichtlichkeit wegen ausschnittsweise der jeweilige Transferbereich, entsprechend den Positionen 62 und 64 (Figur 1) in der Speichereinheit 50 ohne Verblendung 48 (Figur 4a) dargestellt. Die Förderrichtung 44 des Förderbands 20 ist jeweils senkrecht zur Bildebene. Dargestellt ist jeweils eine Seitenansicht.

Auf dem Förderband 20 befinden sich Werkstückträger 22 mit einem zeichnerisch nicht ausgeführten Werkstück des Typs A und in der Speichereinrichtung 50 Werkstückträger 22 mit zeichnerisch nicht ausgeführten Werkstücken des Typs B. Es wird gezeigt, wie ein Werkstückträger 22 mit dem Werkstück des Typs A gegen einen mit dem Werkstück des Typs B ausgetauscht werden.

Auf dem Förderband 20 wird ein Werkstückträger 22 herantransportiert und an der Speichereinrichtung 50 unter deren vorderen Turm 52 angehalten. Die nächstfolgenden stromauf der Speichereinrichtung 50 auf dem Förderband 20 befindlichen Werkstückträger 22 werden vor der Speichereinrichtung 50 angehalten, während das Förderband 20 weiterläuft. Der vordere Speicherturm 52 und der hintere Speicherturm 54 sind jeweils angedeutet.

Der horizontale Manipulator 100 ist in seiner hinteren Endposition auf einer Längsführung 88 angeordnet und hält eine leere Trageinheit 62 ohne Werkstückträger. Dazu weist der Manipulator 100 zwei seitliche Halterungen 122 auf, zwischen denen die Trageinheit 62 gehalten werden kann, wie Figur 5a zeigt.

Die Trageinheiten 62 sind schubladenartig ausgebildet und weisen an ihren Seitenteilen nach außen abstehende Zapfen 76a, 76b, 76c, 76d auf, wie an der einen vorderen Trageinheit 62 angedeutet ist. Die beiden Zapfen 76a, 76b sind übereinander angeordnet und greifen in die in der Figur 4b erkennbaren Führungsschienen der Endlos-Umlaufbahn 90 ein, und zwar im hinteren Turm 54 in die äußere und im vorderen Turm 52 in die innere der paarweisen Führungen56a, 56b, 58a, 58b (Figur 4b). Der Zapfen 76d ist geodätisch im oberen Bereich der Trageinheit-Seitenwand angeordnet und greift entsprechend im hinteren Turm 54 in die innere und im vorderen Turm 52 in die äußere der beiden parallel verlaufenden Führungen der Endlos-Umlaufbahn 90 (Figur 4b).

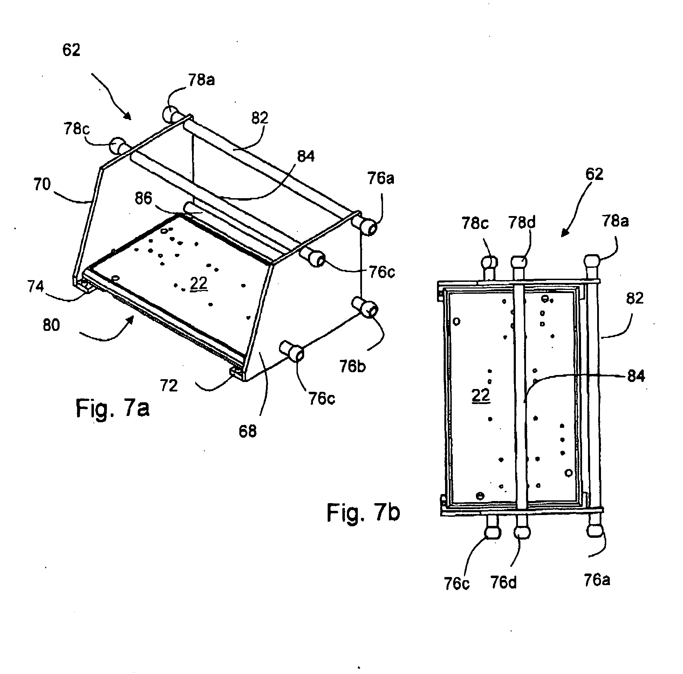

Die Zapfen 76a-76d tragen Gleit- oder Rollelemente, um ein stockungsfreies Bewegen in den Führungen 56a, 56b, 58a, 58b (Figur 4b) der Endlos-Umlaufbahn 90 zu ermöglichen. Damit ist die Trageinheit 62 vorteilhaft auch verkippsicher geführt. Auf der dem Betrachter abgewandten Seite der Trageinheiten 62 sind entsprechende Zapfen symmetrisch angeordnet, wie in Figur 7a, 7b erkennbar ist. Die Trageinheit 62, die sich im vorderen Turm 52 direkt über der mitgeführten Trageinheit 62 befindet, ist mit einem Arretierzapfen 128, der in Figur 4b zu erkennen ist, an den in der Darstellung nicht erkennbaren Führungen fixiert. Entsprechende Arretierzapfen sind auch an der dem Betrachter abgewandten Seite der Speichereinrichtung 50 angeordnet. Dazu fährt der Arretierzapfen 128 so nach innen zur oberen Trageinheit 62, dass deren Zapfen 76d sich auf dem Arretierzapfen 128 ablegen kann. Entsprechend ist auch die Trageinheit 62 im hinteren Turm 54 fixiert.

Weiterhin befindet sich der Zapfen 76c, der in horizontaler Richtung 42 vor den anderen drei Zapfen 76a, 76b, 76d angeordnet ist, außerhalb der vertikalen Führungen der Endlos-Umlaufbahn 90 und dient bei der jeweils vom Manipulator 100 gehaltenen Trageinheit 62 dazu, diese auf dessen Auflagefläche 126 abzustützen. Der hintere untere Zapfen 76b der gehaltenen Trageinheit 62 ist in einer Einkerbung 124 der Halterung 122 gehalten.

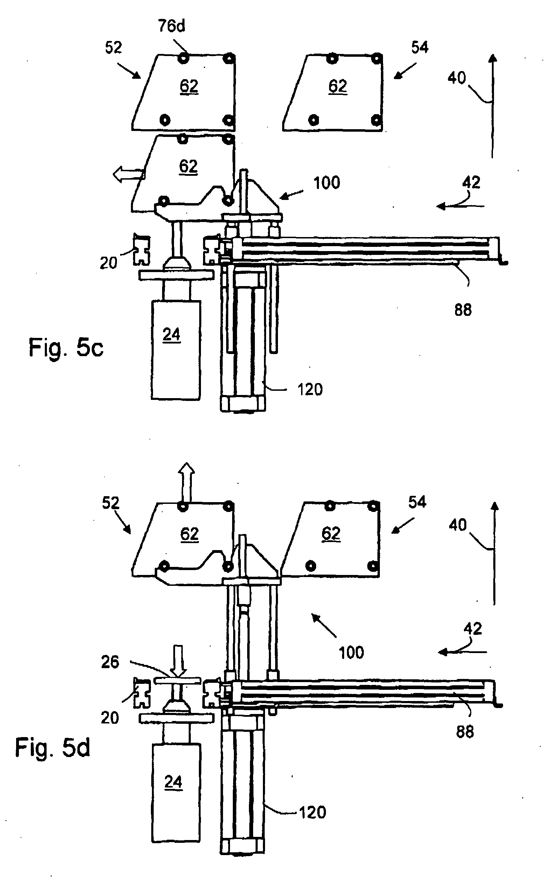

In Figur 5b hebt der mittels eines Pneumatikzylinders 24 betätigbare Ausheber 26 den Werkstückträger 22 vom Förderband 20 ab in eine Position, in der die Trageinheit 62 unter den Werkstückträger 22 geschoben werden kann. Der Werkstückträger 22 wird also etwas höher angehoben als eine in der Trageinheit 62 vorgesehene Ablage für den Werkstückträger 62. Der Manipulator 100 wird in horizontaler Richtung 42 zum Förderband 20 hin bewegt und greift mit seiner mitgeführten Trageinheit 62 unter den Werkstückträger 22 (Figur 5c).

Der horizontale Manipulator 100 wird jetzt von seinem vertikalen Hubmechanismus 120 nach oben gedrückt und verschiebt die übereinander gestapelten Trageinheiten 62 im vorderen Turm 52 um einen Lagerplatz 60 nach oben. Dazu wird die Fixierung der untersten Trageinheit 62 im Turm 52 kurzzeitig gelöst. Nach der Verschiebung fährt der Arretierzapfen 128 wieder nach innen, um nun die nach oben geschobene, vom Manipulator 100 gehaltene Trageinheit 62 an deren Zapfen 76d zu unterfassen und die im Turm 52 befindlichen Trageinheiten 62 zu halten. Der Ausheber 26 kann jetzt abgesenkt werden (Figur 5d).

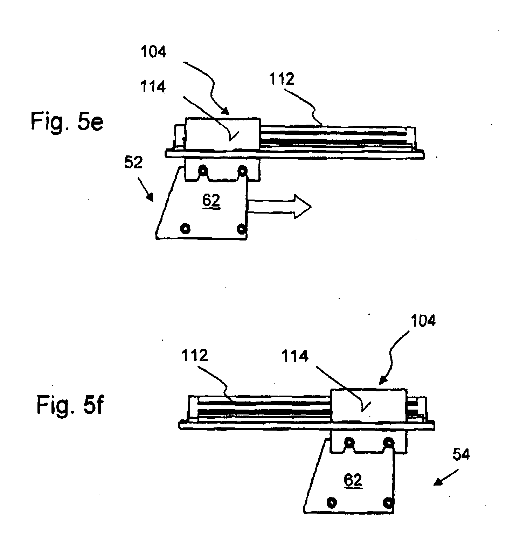

Wie in den Figuren 1-4 zu erkennen war, ist an der oberen Position 64 (oberer Scheitel der Endlos-Umlaufbahn 90) der Speichereinrichtung 50 ein Leerraum von der Höhe eines Lagerplatzes 60 entsprechend einer Trageinheit 62 vorgesehen. Durch das Hochschieben der Trageinheiten 62 im Turm 52 befindet sich nunmehr dort dessen oberste Trageinheit 62. Diese steht jetzt im Eingriff mit einer horizontalen Verschiebeeinheit 104, die diese Trageinheit 62 an ihren oberen Zapfen 76a und 76x packt und vom Turm 52 in den Turm 54 schiebt. Auf dieser Transferstrecke sind die unteren Zapfen 76b, 76d in einer horizontalen Führungsschiene der Traverse 94 der Endlos-Umlaufbahn 90 in Eingriff. Das Verschieben der Trageinheit 62 durch die Verschiebeeinheit 104 ist in den Figuren 5e und 5f dargestellt. Die Zapfen 76a, 76b, 76c, 76d an den Seitenwänden der Trageinheit 62 dienen erkennbar sowohl der Führung der Trageinheit 62 innerhalb der Endlos-Umlaufbahn 90 als auch der Halterung am Manipulator 100 sowie der Halterung und Führung an der Verschiebeeinheit 104 als auch der Verkippsicherung der Trageinheit 62.

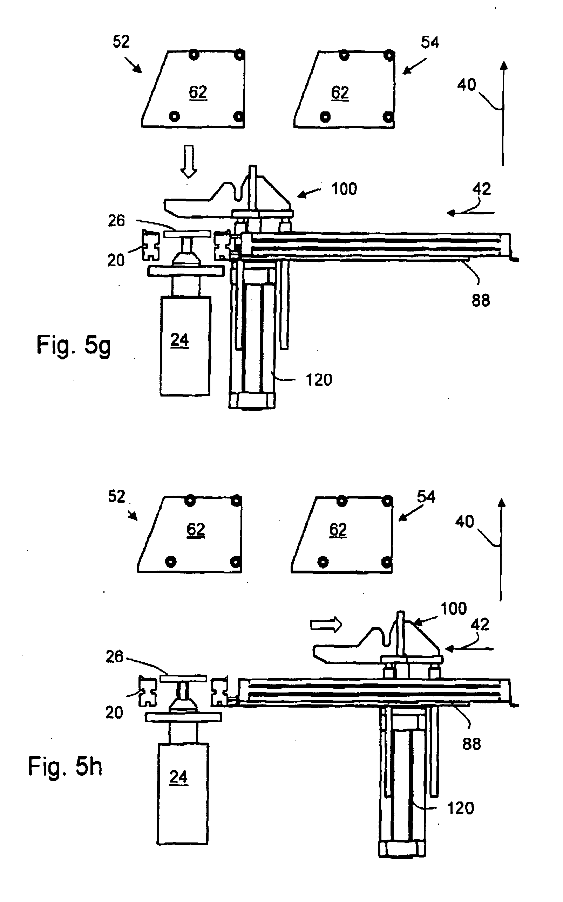

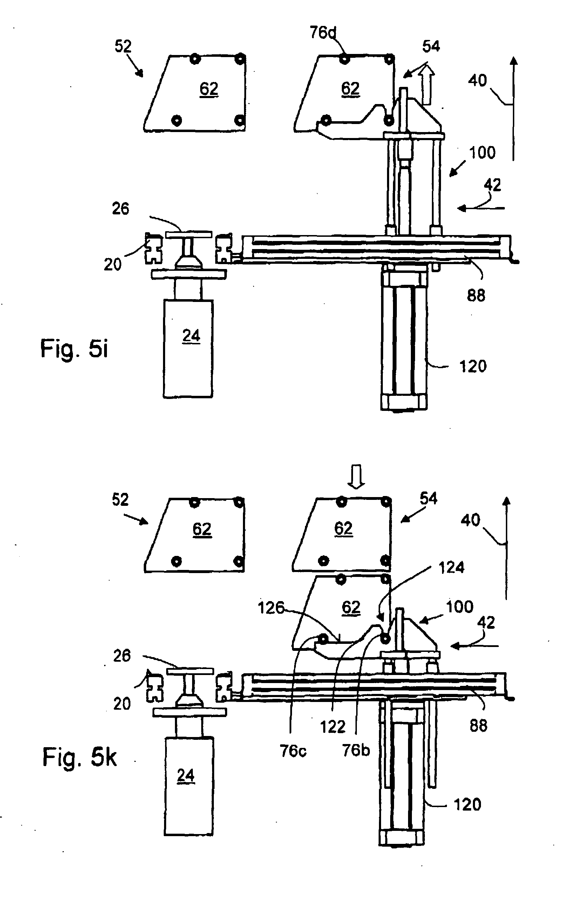

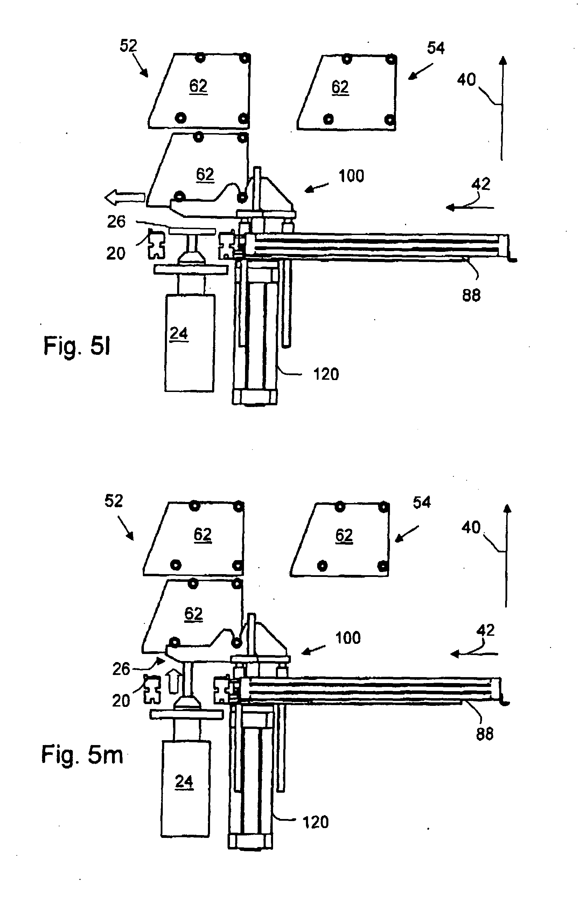

Wie in Figur 5g zu erkennen ist, wird der horizontale Manipulator 100 wieder abgesenkt und zurück unter den Turm 54 gezogen (Figur 5h). Von seiner dortigen Position aus wird der Manipulator 100 durch den vertikalen Hubmechanismus 120 wieder nach oben bewegt, bis er mit der untersten Trageinheit 62 des Turms 54 in Kontakt ist. Bis zu diesem Zeitpunkt ist dieser mit seinem Zapfen 76d durch einen entsprechenden, nicht erkennbaren Arretierzapfen 130 an der Führungsschiene der Endlos-Umlaufbahn 90 fixiert (Figur 5i). Der Arretierzapfen 130 wird jetzt gelöst und der Turm 54 um einen Lagerplatz 60 nach unten bewegt, indem der Manipulator 100 abgesenkt wird. Die über der vom Manipulator 100 gehaltenen Trageinheit 62 wird wieder durch Ausfahren des Arretierzapfens 130 fixiert (Figur 5k). In der vom Manipulator 100 gehaltenen Trageinheit 62 ist ein nicht erkennbarer Werksttickträger 22 mit einem Werkstück des Typs B abgelegt. Der horizontale Manipulator 100 wird wieder nach vorne zum Förderband 20 bewegt (Figur 5l).

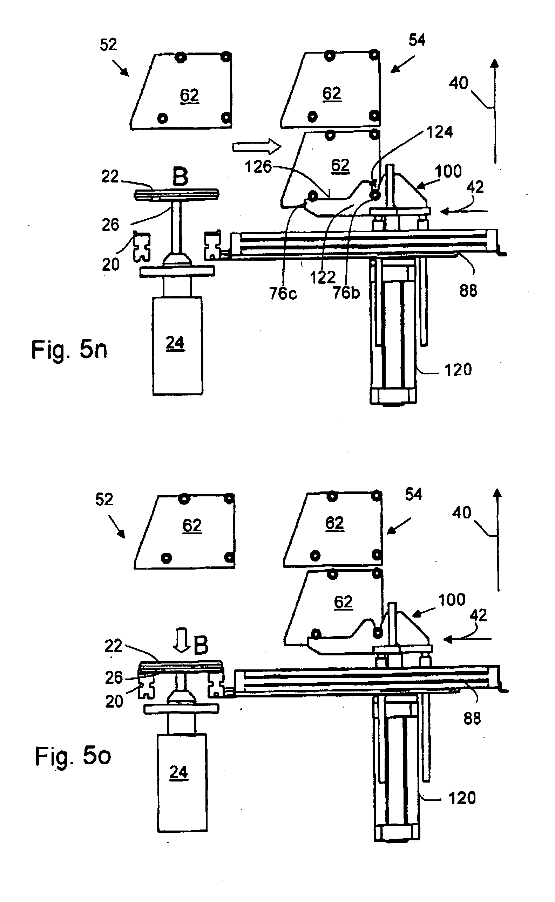

Der Ausheber 26 fährt nach oben und hebt den Werkstückträger 22 mit dem Werkstück des Typs B in der Trageinheit 22 etwas an (Figur 5m). Der horizontale Manipulator 100 fährt mit leerer Trageinheit 62 zurück in seine hintere Endposition unter den Turm 54 (Figur 5n). Der Ausheber 26 fährt nach unten und setzt den frischen Werkstückträger mit dem Werkstück des Typs B auf dem Förderband 20 zur weiteren Bearbeitung ab (Figur 5o). In die jetzt vom Manipulator 100 gehaltene leere Trageinheit 62 kann jetzt ein weiterer, auf dem Förderband 20 befindlicher Werkstückträger 22 aufgenommen werden.

Selbstverständlich kann der Austausch auch in umgekehrter Drehrichtung innerhalb der Speichereinrichtung 50 erfolgen, und es können auch nur Werkstückträger 22 aufgenommen oder nur Werkstückträger 22 abgegeben werden, je nach Bedarf.

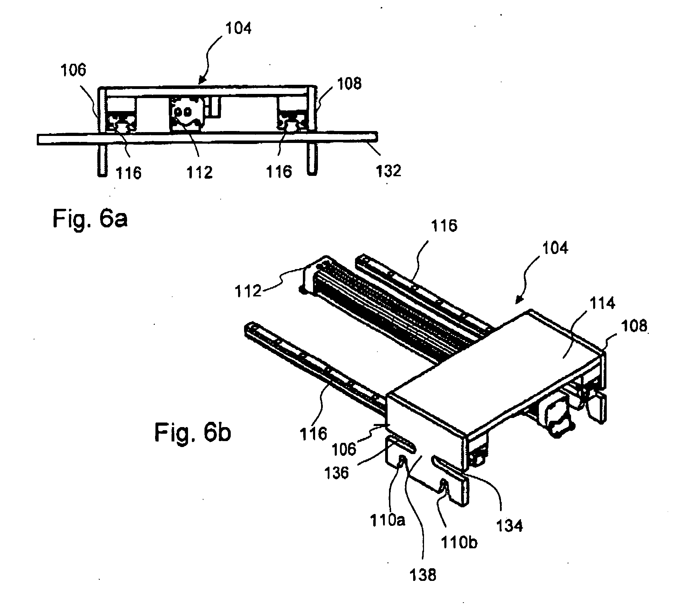

Detailansichten einer Verschiebeeinheit 104, wie sie am oberen Ende der Speichereinrichtungen 50 vorgesehen ist, zeigen die Figuren 6a und 6b, wobei eine Vorderansicht in Figur 6a und eine Schrägansicht in Figur 6b abgebildet ist.

Die Verschiebeeinheit 104 ist als Schlitten auf zwei seitlichen Führungen 116 geführt, die in horizontaler Richtung 42 ausgerichtet sind. Die Verschiebeeinheit 104 weist zwei Seitenwände 106, 108 auf, die nach unten zu den nicht dargestellten Trageinheiten 62 gerichtet sind. Ein Pneumatikzylinder 112 verschiebt den Schlitten bedarfsweise. Die Seitenwände 106, 108 weisen vertikale Einkerbungen 110a, 110b auf, die mit den Zapfen 76a, 76d der Trageinheiten 62 korrespondieren, die zum Verschieben in die Einkerbungen 110a, 110b einfahren. Zwei horizontale, durch einen Steg 138 getrennte Kerben 134, 136 erlauben einen Eingriff einer horizontalen Platte 132, wobei der Steg 138 jeweils als vorderer oder hinterer Endanschlag dient. Die Platte 132 bildet eine Art Rahmen um die Verschiebeeinheit 104.

Die Figuren 7a und 7b zeigen Detailansichten einer Trageinheit 62 als schräge Übersicht (7a) und als Draufsicht (7b). Die Trageinheit 62 ist schubladenartig aufgebaut und weist zwei Seitenwände 68, 70 auf, die je vier nach außen abgewinkelte Zapfen 76a, 76b, 76c, 76d aufweisen, wobei von der abbildungshinteren Seitenwand 70 nur die beiden oberen Zapfen 78a, 78d zu erkennen sind. Die oberen Zapfen 76a, 78a bzw. 76d, 78d sind mit je einer Stange 82 bzw. 82 verbunden. Der untere Zapfen 76b ist ebenfalls mit einer Stange 86 mit seinem gegenüberliegenden, nicht erkennbaren Pendant verbunden. Die Funktion der Zapfen 76a-d bzw. 78a-d zur sicheren, kippsicheren Führung und/oder Fixierung in der Speichereinrichtung 50 ist bereits beschrieben worden. Damit bildet die Trageinheit 62 eine stabile Aufnahme für einen Werkstückträger 22.

An jeder Seitenwand 68, 70 ist am unteren Ende je eine schmale, als Leiste ausgebildete Halterung 72, 74 angeordnet, auf die der Werkstückträger 22 abgelegt werden kann. Die Halterungen 72, 74 können, auch als Finger oder dergleichen ausgebildet sein.

Zwischen den Halterungen 72, 74 ist die Trageinheit 62 offen mit einer lichten Öffnung 80, so dass beispielsweise ein Ausheber 26 einfach von unten den eingelegten Werkstückträger 22 kontaktieren kann. Wird der Werkstückträger 22 dann einige Millimeter angehoben, kann die Trageinheit 62 einfach darunter weggezogen werden. Das Einsetzen des Werkstückträgers 22 in die Trageinheit 62 folgt dann entsprechend dem umgekehrten Ablauf.

Bei einer Anwendung ohne Förderband 20 bzw. ohne Werkstückträger 22 wäre zwischen den Seitenwänden 68, 70 zweckmäßigerweise ein fester Boden ausgebildet, auf den beispielsweise Kleinteile abgelegt werden können. Die beschriebenen Bewegungsabläufe der Trageinheiten 62 in der Endlos-Umlaufbahn 90 gelten für eine solche Ausgestaltung entsprechend.

### Bezugszeichenliste

- 10: Vorrichtung
- 12: Vorrichtung
- 14: Vorrichtung
- 16: Boden
- 20: Förderband
- 22: Werkstückträger
- 24: Hubeinheit
- 26: Ausheber
- 28: Hauptbahn
- 32: Gurtband
- 34: Gurtband
- 40: vertikale Richtung
- 42: horizontale Richtung
- 44: Förderrichtung
- 48: Verblendung
- 50: Speichereinrichtung
- 52: Turm
- 54: Turm
- 56a, b: Führung
- 58a, b: Führung
- 60: Lagerplatz
- 62: Trageinheit
- 64: Position
- 66: Position
- 68: Seitenwand
- 70: Seitenwand
- 72: Halterung
- 74: Halterung
- 76a-d: Zapfen
- 78a-d: Zapfen
- 80: lichte Öffnung
- 82: Stange
- 84: Stange
- 86: Stange
- 88: Längsführung Manipulator
- 90: Endlos-Umlaufbahn
- 92: Unterseite
- 94: Oberseite
- 96: Schenkel
- 98: Schenkel
- 100: horizontaler Manipulator
- 102: Schlitten
- 104: Verschiebeeinheit
- 106: Seitenwand
- 108: Seitenwand
- 110a, 110b: Ausnehmung
- 112: Antrieb
- 114: Schlitten
- 116: Führung
- 118: Extremposition
- 120: vertikaler Manipulator
- 122: Halterung
- 124: Greifer
- 126: Auflagefläche
- 128: Arretierzapfen
- 130: Arretierzapfen
- 132: Platte
- 134: Kerbe
- 136: Kerbe
- 138: Steg

## Patentansprüche

1. Vorrichtung mit einer Speichereinrichtung (50) für eine Mehrzahl von Lagerplätze (60) bildenden Trageinheiten (62), mit einer Endlos-Umlaufbahn (90), bei der sich zwei parallele Schenkel (96, 98) zwischen einem oberen und einem unteren Scheitel erstrecken, **dadurch gekennzeichnet, dass** an dem oberen Scheitel einer Endlos-Umlaufbahn (90) eine Verschiebeeinheit (104) angeordnet ist, mit der jeweils eine Trageinheit (62) horizontal von einem in den anderen Schenkel (96, 98) der Endlos-Umlaufbahn (90) verschiebbar ist., und an dem unteren Scheitel der Endlos-Umlaufbahn (90) ein Manipulator (100) zur automatischen Verschiebung der Trageinheiten (62) von dem einem Schenkel (96, 98) in den anderen Schenkel (96, 98) der Endlos-Umlaufbahn (90) vorgesehen ist, wobei die Trageinheiten (62) seitlich abstehende zapfenartige Führungen (76a, 76b, 76c, 76d; 78a, 78b, 78c, 78d) aufweisen, die mit parallelen Führungen (56a, 56b, 58a, 58b) in der Endlos-Umlaufbahn (90) und zur Verschiebung und Halterung mit dem Manipulator (100) und der Verschiebeeinheit (104) im Eingriff sind.

2. Vorrichtung nach Anspruch 1, **dadurch gekennzeichnet, dass** jeweils einer der Trageinheiten (62) durch den Manipulator (100) in der Endlos-Umlaufbahn (90) um wenigstens einen Lagerplatz (60) horizontal verschiebbar ist.

3. Vorrichtung nach Anspruch 1 oder 2, **dadurch gekennzeichnet, dass** der Manipulator (100) so ausgebildet ist, dass dieser in horizontaler Richtung (42) aus der Endlos-Umlaufbahn (90) herausgreifen kann.

4. Vorrichtung nach einem der vorhergehenden Ansprüche, **dadurch gekennzeichnet, dass** der Manipulator (100) eine Halterung (102) aufweist, in der jeweils eine Trageinheit (62) verkippsicher haltbar ist.

5. Vorrichtung nach einem der vorhergehenden Ansprüche, **dadurch gekennzeichnet, dass** die Trageinheit (62) zwei Seitenwände (68, 70) aufweist, zwischen denen ein fester Boden angeordnet ist.

6. Vorrichtung nach einem der vorhergehenden Ansprüche, **dadurch gekennzeichnet, dass** die Trageinheit (62) zwei Seitenwände (68, 70) aufweist, zwischen denen ein Werkstückträger (22) ablegbar ist und der Werkstückträger (22) in der Trageinheit (62) auf je einer an jeder der Seitenwänden (68, 70) angeordneten Halterungen (72, 74) ablegbar ist, wobei sich zwischen den Halterungen (72, 74) eine lichte Öffnung (80) erstreckt.

7. Vorrichtung nach einem der vorhergehenden Ansprüche, **dadurch gekennzeichnet, dass** die Trageinheit (62) an jeder ihrer Seitenwände (68, 70) wenigstens vier winklig nach außen abstehende Zapfen (76a, 76b, 76c, 76d; 78a, 78b, 78c, 78d) aufweist, von denen wenigstens drei verkippungssicher in entlang der Endlos-Umlaufbahn (90) angeordnete parallelen Führungen (56a, 56b, 58a, 58b) im Eingriff sind.

8. Vorrichtung nach einem der vorhergehenden Ansprüche, **dadurch gekennzeichnet, dass** die Trageinheiten (62) im Arbeitszustand in wenigstens zwei in horizontaler Richtung (42) versetzten Türmen (52, 54) äquidistant übereinander gestapelt angeordnet sind, welche die vertikalen Schenkel (96, 98) der Endlos-Umlaufbahn (90) bilden.

9. Vorrichtung nach einem der vorhergehenden Ansprüche, **dadurch gekennzeichnet, dass** der horizontale Manipulator (100) auf einer Längsführung (88) geführt ist.

10. Vorrichtung nach einem der vorhergehenden Ansprüche, **dadurch gekennzeichnet, dass** ein vertikaler Hubmechanismus (120) vorgesehen ist, mit dem eine Vertikalbewegung der Trageinheiten (62) in der Endlos-Umlaufbahn (90) durchführbar ist.

11. Vorrichtung nach Anspruch 10, **dadurch gekennzeichnet, dass** der horizontale Manipulator (100) mit dem vertikalen Hubmechanismus (120) als ein Bauteil so verbunden ist, dass der Hubmechanismus (120) gemeinsam mit dem Manipulator (100) horizontal verschieblich ist.

12. Vorrichtung nach einem der vorhergehenden Ansprüche, **dadurch gekennzeichnet, dass** vertikal benachbart zum horizontalen Manipulator (100) jedem vertikalen Schenkel (96, 98) der Endlos-Umlaufbahn (90) wenigstens ein Arretiermittel (128, 130) zugeordnet ist, mit dem eine geodätisch oberhalb des horizontalen Manipulators (100) angeordnete Trageinheit (62) an ihrer Führung (56a, 56b, 58a, 58b) arretierbar ist.

13. Vorrichtung nach einem der vorhergehenden Ansprüche, **dadurch gekennzeichnet, dass** zwischen zwei vertikalen Schenkeln (96, 98) der Endlos-Umlaufbahn (90) mindestens ein weiterer Turm mit Trageinheiten (62) angeordnet ist.

14. Vorrichtung nach einem der vorhergehenden Ansprüche, **dadurch gekennzeichnet, dass** eine Hubeinheit (24) vorgesehen ist, mit der ein Werkstückträger (22) von einem Förderband (20) abnehmbar ist, um den Werkstückträger (22) in Wirkverbindung mit dem horizontalen Manipulator (100) zu bringen.

15. Vorrichtung nach einem der vorhergehenden Ansprüche, **dadurch gekennzeichnet, dass** der horizontale Manipulator (100) und/oder der vertikale Hubmechanismus (120) und/oder die Verschiebeeinheit (104) einen pneumatischen Antrieb aufweisen.

16. Vorrichtung nach einem der vorhergehenden Ansprüche, **dadurch gekennzeichnet, dass** der horizontale Manipulator (100) und/oder der vertikale Hubmechanismus (120) und/oder die Verschiebeeinheit (104) einen Antrieb aus der Gruppe Kettentrieb, Elektroantrieb, magnetischen Antrieb, induktiven Antrieb aufweisen.

17. Vorrichtung nach einem der vorhergehenden Ansprüche, **dadurch gekennzeichnet, dass** Identifizierungsmittel und/oder Zählmittel vorgesehen sind, welche die vom Förderband (20) aufgenommenen und/oder an das Förderband (20) abgegebenen Werkstückträger (22) identifizieren und/oder zählen.

18. System aus wenigstens einer Vorrichtung (10, 12. 14) nach einem der Ansprüche 1 bis 17, mit wenigstens einer Speichereinrichtung (50) für eine Mehrzahl von auf dem wenigstens einen Förderband (20) transportierbaren Werkstückträgern (22), in welcher die Werkstückträger (22) in Lagerplätze (60) der Speichereinrichtung (50) bildende Trageinheiten (62) aufnehmbar sind, nach einem der vorhergehenden Ansprüche, **dadurch gekennzeichnet, dass** das Förderband (20) unterbrechungsfrei durch die Vorrichtung (10, 12, 14) führbar ist.

19. System nach Anspruch 18, **dadurch gekennzeichnet, dass** die Trageinheiten (62) in der Speichereinrichtung (50) auf einer im Arbeitszustand sich um wenigstens drei Lagerplätze (60) in vertikaler Richtung (40) erstreckenden paternosterartigen Endlos-Umlaufbahn (90) bewegbar sind, wobei an einer definierten Position (64) der Endlos-Umlaufbahn (90) ein im Arbeitszustand horizontal beweglichen Manipulator (100) angeordnet ist.

20. System nach Anspruch 18 oder 19, **dadurch gekennzeichnet, dass** die Trageinheiten (62) in der Speichereinrichtung (50) in wenigstens zwei in horizontaler Richtung (42) versetzten Türmen (52, 54) äquidistant übereinander gestapelt angeordnet sind.

21. System nach einem der Ansprüche 18 bis 20, **dadurch gekennzeichnet, dass** der vordere Turm (52) geodätisch über dem Förderband (20) und der hintere Turm (54) in horizontaler Richtung (42) versetzt neben dem Förderband (20) angeordnet ist.

22. System nach einem der Ansprüche 18 bis 21, **dadurch gekennzeichnet, dass** eine förderbandeigene und/oder vorrichtungseigene Hubeinheit (24) vorgesehen ist, mit der ein auf dem Förderband (20) befindlicher Werkstückträger (22) vom Förderband (20) aufnehmbar und in Wirkverbindung mit einem horizontalen Manipulator (100) der Vorrichtung (10, 12, 14) bringbar ist oder von einem horizontalen Manipulator (100) der Vorrichtung (10, 12, 14) entnehmbar und auf das Förderband (20) ablegbar ist.

23. System nach einem der Ansprüche 18 bis 22, **dadurch gekennzeichnet, dass** die Vorrichtung (10, 12, 14) an einer Aushebevorrichtung (24, 26) des Förderbands (20) angeordnet ist, bei der Werkstückträger (22) vertikal vom Förderband (20) abhebbar sind.

24. System nach einem der Ansprüche 18 bis 23, **dadurch gekenntzeichnet, dass** die Vorrichtung (10, 12, 14) an einer weichenartigen Ausschiebevorrichtung des Förderbands (20) angeordnet ist, bei der Werkstückträger (22) aus einer Hauptbahn des Förderbands (20) auskoppelbar sind.

## Claims

1. An apparatus including a storage facility (50) for load units (62) forming a plurality of storage bins (60), the apparatus including an endless conveyor orbit (90), the endless conveyor orbit (90) including two parallel legs (96, 98) extend between an upper vertex and a lower vertex,
**characterized in that**
a displacement unit (104) is arranged at the upper vertex of the endless conveyor orbit (90), the displacement unit (104) being operable to horizontally displace each load unit (62) from one of the legs to another of the legs (96, 98) of the endless conveyor orbit (90), and a manipulator (100) is arranged at the lower vertex of the endless conveyor orbit (90) for automatically displacing the load units (62) from one of the legs to the other of the legs (96, 98) of the endless conveyor orbit (90), whereby the load units (62) include sideways projecting tap-like guides (76a, 76b, 76c, 76d; 78a, 78b, 78c, 78d), the guides providing for parallel movement (56a, 56b, 58a, 58b) in the endless conveyor orbit (90) and allowing for displacement and support when acted upon by the manipulator (100) and the displacement unit (104).

2. An apparatus as claimed in claim 1, **characterized in that** each of the load units (62) is adapted so that at least one storage bin (60) thereof is horizontally displaceable by the manipulator (100) in the endless conveyor orbit (90).

3. An apparatus as claimed in claim 1 or 2, **characterized in that** the manipulator (100) is adapted to grab in a horizontal direction (42) from the endless conveyor orbit (90).

4. An apparatus as claimed in any one of the preceding claims, **characterized in that** the manipulator (100) includes a holder (102) in which at least one load unit (62) is securely held for preventing tipping thereof.

5. An apparatus as claimed in any one of the preceding claims, **characterized in that** the load unit (62) includes two side walls (68, 70), between which a secure floor is provided.

6. An apparatus as claimed in any one of the preceding claims, **characterized in that** the load unit (62) includes two side walls (68, 70), between which a workpiece carrier (22) is positionable, and the workpiece carrier (22) in the load unit (62) is adapted to be laid in holders (72, 74) associated with one or more of the side walls (68, 70), whereby an internal opening (80) extends therebetween.

7. An apparatus as claimed in any one of the preceding claims, **characterized in that** the load unit (62) at each of its side walls (68, 70) includes at least four angled outwardly-projecting taps (76a, 76b, 76c, 78d; 78a, 78b, 78c, 78d), of which at least three of the taps are operable in parallel guides (56a, 56b, 68a, 58b) disposed along the endless conveyor orbit (90) to prevent tipping.

8. An apparatus as claimed in any one of the preceding claims, **characterized in that** the load units (62) in an operational state are disposed equidistantly in a stacked manner in at least two towers (52, 54) disposed in a horizontal direction (42), wherein the vertical legs (96, 98) of the towers (52, 54) form the endless conveyor orbit (90).

9. An apparatus as claimed in any one of the preceding claims, **characterized in that** the horizontal manipulator (100) is actuated along an elongate guide (88).

10. An apparatus as claimed in any one of the preceding claims, **characterized in that** the apparatus includes a vertical stroke mechanism (120), the mechanism (120) being operable to cause a vertical movement of the load units (62) in the endless conveyor orbit (90).

11. An apparatus as claimed in claim 10, **characterized in that** the horizontal manipulator (100) together with the vertical stroke mechanism (120) are integrated to an extent that the stroke mechanism (120) together with the manipulator (100) are horizontally displaceable.

12. An apparatus as claimed in any one of the preceding claims, **characterized in that** the apparatus includes vertically neighbouring to the manipulator (100) of each vertical leg (96, 98) of the endless conveyor orbit (90) at least one retaining means (128, 130), wherein a spatially upper half of the load unit (62) of the horizontal manipulator (100) is retainable in its guides (56a, 56b, 58a, 58b).

13. An apparatus as claimed in any one of the preceding claims, **characterized in that** the apparatus includes between the two vertical legs (96, 98) of the endless conveyor orbit (90) at least a further tower including load units (62).

14. An apparatus as claimed in any one of the preceding claims, **characterized in that** the apparatus includes an actuator unit (24), the actuator unit (24) being operable to remove a workpiece carrier (22) from a conveyor belt (20), in order to bring the workpiece carrier (22) in working connection with the horizontal manipulator (100).

15. An apparatus as claimed in any one of the preceding claims, **characterized in that** the horizontal manipulator (100) and/or the vertical stroke mechanism (120) and/or the displacement unit (104) are provided with pneumatic actuation.

16. An apparatus as claimed in any one of the preceding claims, **characterized in that** the horizontal manipulator (100) and/or the vertical stroke mechanism (120) and/or the displacement unit (104) are provided with a drive from the group of chain drive, electrical actuation, magnetic actuation, inductive actuation.

17. An apparatus as claimed in any one of the preceding claims, **characterized in that** the apparatus includes identifying means and/or counting means for identifying and/or counting a workpiece carrier (20) extracted from the conveyor (20) and/or loaded onto the conveyor (20).

18. A system including at least one apparatus (10, 12, 14) according to any one of claims 1 to 17, including at least one storage facility (50) for a plurality of conveyor-transportable workpiece carriers (22), wherein the workpiece carriers (22) are off-loadable into load units (62) forming storage bins (60) of the storage facility (50), according to one of the preceding claims, **characterized in that** the conveyor (20) is movable without interruption through the apparatus (10, 12, 14).

19. A system as claimed in claim 18, **characterized in that** the load units (62) in the storage facility (50) are operable to move along a paternoster-type endless conveyor orbit (90), which in working state extends for at least three storage bins (60) in a vertical direction (40), whereby a horizontal moveable manipulator (100) is included at a given defined position (64) of the endless conveyor orbit (90).

20. A system as claimed in claim 18 or 19, **characterized in that** the load units (62) in the storage facility (50) are included in an equidistant stacked manner in at least two towers (52, 54) which are spatially disposed in a horizontal direction (42).

21. A system as claimed in any one of claims 18 to 20, **characterized in that** the front tower (52) is spatially disposed over the conveyor (20) and the rear tower (54) is disposed in a horizontal direction (42) movably adjacent to the conveyor (20).

22. A system as claimed in any one of claims 18 to 21, **characterized in that** the system includes a conveyor-adapted and/or device-adapted displacement unit (24), the displacement unit (24) being operable to take a workpiece carrier (22) being situated on the conveyor (20) and bring the workpiece carrier (22) into functional engagement with a horizontal manipulator (100) of the apparatus (10, 12, 14) or lay the workpiece carrier (22) from a horizontal manipulator (100) of the apparatus (10, 12, 14) onto the conveyor (20).

23. A system as claimed in any one of claims 18 to 22, **characterized in that** the apparatus (10, 12, 14) includes an emptying device (24, 26) for the conveyor (20), by which the workpiece carrier (22) is removable vertically from the conveyor (20).

24. A system as claimed in any one of claims 18 to 23, **characterized in that** the apparatus (10, 12, 14) includes a switch-like displacement device for the conveyor (20), by which the workpiece carrier (22) is decouplable from a main track of the conveyor (20).

## Revendications

1. Dispositif présentant un système de stockage (50) pour plusieurs unités porteuses (62) formant des emplacements de stockage (60), avec une voie de circulation sans fin (90), pour laquelle deux branches parallèles (96, 98) s'étendent entre une extrémité supérieure et une extrémité inférieure, **caractérisé en ce qu'**est disposée, à l'extrémité supérieure d'une voie de circulation sans fin (90), une unité de translation (104) avec laquelle respectivement une unité porteuse (62) peut être déplacée horizontalement d'une branche à l'autre (96, 98) de la voie de circulation sans fin (90), et qu'est prévu, à l'extrémité inférieure de la voie de circulation sans fin (90), un manipulateur (100) pour le déplacement automatique des unités porteuses (62) d'une branche (96, 98) à l'autre (96, 98) de la voie de circulation sans fin (90), sachant que les unités porteuses (62) présentent des guides en forme de tourillon dépassant latéralement (76a, 76b, 76c, 76d ; 78a, 78b, 78c, 78d), qui sont en prise avec des guidages parallèles (56a, 56b, 58a, 58b) dans la voie de circulation sans fin (90), et avec le manipulateur (100) et l'unité de translation (104) pour le déplacement et le maintien.

2. Dispositif selon la revendication 1, **caractérisé en ce que** chacune des unités porteuses (62) peut être déplacée horizontalement par le manipulateur (100) d'au moins un emplacement de stockage (60) dans la voie de circulation sans fin (90).

3. Dispositif selon la revendication 1 ou 2, **caractérisé en ce que** le manipulateur (100) est conçu de manière à pouvoir effectuer un prélèvement dans le sens horizontal (42) sur la voie de circulation sans fin (90).

4. Dispositif selon l'une des revendications précédentes, **caractérisé en ce que** le manipulateur (100) présente un dispositif de maintien (102) dans lequel respectivement une unité porteuse (62) peut être maintenue sans risque de basculement.

5. Dispositif selon l'une des revendications précédentes, **caractérisé en ce que** l'unité porteuse (62) présente deux parois latérales (68, 70) entre lesquelles se trouve un fond rigide.

6. Dispositif selon l'une des revendications précédentes, **caractérisé en ce que** l'unité porteuse (62) présente deux parois latérales (68, 70) entre lesquelles un porte-pièce (22) peut être déposé et que le porte-pièce (22) peut être placé dans l'unité porteuse (62) sur respectivement un des dispositifs de maintien (72, 74) disposés sur chacune des parois latérales (68, 70), sachant qu'une ouverture (80) est ménagée entre les dispositifs de maintien (72, 74).

7. Dispositif selon l'une des revendications précédentes, **caractérisé en ce que** l'unité porteuse (62) présente sur chacune de ses parois latérales (68, 70) au moins quatre tourillons s'étendant en saillie vers l'extérieur et de manière angulaire (76a, 76b, 76c, 76d ; 78a, 78b, 78c, 78d), dont au moins trois s'engagent dans les guidages parallèles (56a, 56b, 58a, 58b) disposés le long de la voie de circulation sans fin (90) de manière à empêcher tout basculement.

8. Dispositif selon l'une des revendications précédentes, **caractérisé en ce que** les unités porteuses (62) sont, en état de fonctionnement, empilées à équidistance les unes au-dessus des autres dans au moins deux tours (52, 54) décalées dans le sens horizontal (42), lesquelles forment les branches verticales (96, 98) de la voie de circulation sans fin (90).

9. Dispositif selon l'une des revendications précédentes, **caractérisé en ce que** le manipulateur horizontal (100) est conduit sur un guidage longitudinal (88).

10. Dispositif selon l'une des revendications précédentes, **caractérisé en ce qu'**est prévu un mécanisme de levage vertical (120) qui permet à l'unité porteuse (62) de réaliser un mouvement vertical dans la voie de circulation sans fin (90).

11. Dispositif selon la revendication 10, **caractérisé en ce que** le manipulateur horizontal (100) est relié au mécanisme de levage vertical (120) sous forme d'un élément de telle manière que le mécanisme de levage (120) peut être déplacé horizontalement en même temps que le manipulateur (100).

12. Dispositif selon l'une des revendications précédentes, **caractérisé en ce que,** dans la zone verticalement proche du manipulateur horizontale (100), au moins un élément d'arrêt (128, 130) est affecté à chaque branche verticale (96, 98) de la voie de circulation sans fin (90), élément grâce auquel une unité porteuse (62) disposée géodésiquement au-dessus du manipulateur horizontal (100) peut être arrêtée sur son guidage (56a, 56b, 58a, 58b).

13. Dispositif selon l'une des revendications précédentes, **caractérisé en ce qu'**est disposée, entre deux branches verticales (96, 98) de la voie de circulation sans fin (90) au moins une autre tour avec des unités porteuses (62).

14. Dispositif selon l'une des revendications précédentes, **caractérisé en ce qu'**est prévue une unité de levage (24) grâce à laquelle un porte-pièce (22) peut être prélevé d'un convoyeur à bande (20) afin de mettre le porte-pièce (22) en liaison active avec le manipulateur (100) horizontal.

15. Dispositif selon l'une des revendications précédentes, **caractérisé en ce que** le manipulateur horizontal (100) et/ou le mécanisme de levage vertical (120) et/ou l'unité de translation (104) présentent une commande pneumatique.

16. Dispositif selon l'une des revendications précédentes, **caractérisé en ce que** le manipulateur horizontal (100) et/ou le mécanisme de levage vertical (120) et/ou l'unité de translation (104) présentent un système d'entraînement composée du groupe incluant transmission par chaîne, commande électrique, commande magnétique, commande inductive.

17. Dispositif selon l'une des revendications précédentes, **caractérisé en ce que** sont prévus des moyens d'identification et/ou des moyens de comptage qui identifient et/ou comptent les porte-pièces (22) prélevés du convoyeur à bande (20) et/ou placés sur le convoyeur à bande (20).

18. Système composé d'au moins un dispositif (10, 12, 14) selon l'une des revendications 1 à 17, avec au moins un système de stockage (50) pour plusieurs porte-pièces (22) transportables sur le convoyeur à bande (20) au moins en présence, dans lequel les porte-pièces (22) peuvent être prélevés dans des unités porteuses (62) formant des emplacements de stockage (60) du système de stockage (50), selon l'une des revendications précédentes, **caractérisé en ce que** le convoyeur à bande (20) peut être conduit sans interruption à travers le dispositif (10, 12, 14).

19. Système selon la revendication 18, **caractérisé en ce que** les unités porteuses (62) peuvent, dans le système de stockage (50), être déplacées en état de fonctionnement sur une voie de circulation sans fin (90) de type rotatif s'étendant dans le sens vertical (40) autour d'au moins trois emplacements de stockage (60), sachant qu'un manipulateur (100) se déplaçant horizontalement en état de fonctionnement est disposé à un endroit défini (64) de la voie de circulation sans fin (90).

20. Système selon la revendication 18 ou 19, **caractérisé en ce que** les unités porteuses (62) sont, dans le système de stockage (50), empilées à équidistance les unes au-dessus des autres dans au moins deux tours (52, 54) décalées dans le sens horizontal (42).

21. Système selon l'une des revendications 18 à 20, **caractérisé en ce que** la tour avant (52) est placée géodésiquement au-dessus du convoyeur à bande (20) et la tour arrière (54) de façon décalée dans le sens horizontal (42), à côté du convoyeur à bande (20).

22. Système selon l'une des revendications 18 à 21, **caractérisé en ce qu'**est prévue une unité de levage (24) propre au convoyeur à bande et/ou au dispositif, avec laquelle un porte-pièce (22) se trouvant sur le convoyeur à bande (20) peut être prélevé du convoyeur à bande (20) et mis en liaison active avec un manipulateur horizontal (100) du dispositif (10, 12, 14) ou retiré d'un manipulateur horizontal (100) du dispositif (10, 12, 14) et déposé sur le convoyeur à bande (20).

23. Système selon l'une des revendications 18 à 22, **caractérisé en ce que** le dispositif (10, 12, 14) est placé sur un dispositif de soulèvement (24, 26) du convoyeur en bande (20), avec lequel des porte-pièces (22) peuvent être soulevés verticalement du convoyeur à bande (20).

24. Système selon l'une des revendications 18 à 23, **caractérisé en ce que** le dispositif (10, 12, 14) est placé sur un dispositif de déplacement de type aiguillage du convoyeur en bande (20), avec lequel des porte-pièces (22) peuvent être séparés d'une voie principale du convoyeur à bande (20).
